# EUROPEAN PATENT APPLICATION

(11) **EP 4 311 337 A1**
(43) Date of publication of application: **24.01.2024**
(21) Application number: 22778757.9
(22) Date of filing: 25.03.2022
(51) Int. Cl.: H04W 72/04

(54) **METHOD AND APPARATUS FOR TRANSMITTING UPLINK CONTROL INFORMATION**

(30) Priority: 01.04.2021 CN 202110355741
(71) Applicant: Huawei Technologies Co., Ltd., Shenzhen, Guangdong 518129 (CN)
(72) Inventor: SU, Tong, Shenzhen, Guangdong 518129 (CN); GUAN, Lei, Shenzhen, Guangdong 518129 (CN); XIA, Jinhuan, Shenzhen, Guangdong 518129 (CN)
(74) Representative: Pfenning, Meinig & Partner mbB
(86) International application number: PCT/CN2022/082909
(87) International publication number: WO 2022/206574

(57) **Abstract**

This application provides an uplink control information transmission method and an apparatus. In the method, a terminal device obtains first physical uplink control channel PUCCH configuration information corresponding to multicast data and second PUCCH configuration information corresponding to unicast data. When first hybrid automatic repeat request-acknowledgment HARQ-ACK information corresponding to one or more pieces of received multicast data and second HARQ-ACK information corresponding to one or more pieces of received unicast data have a same priority and need to be fed back in a same time unit, the terminal device may determine a PUCCH resource based on the first PUCCH configuration information or the second PUCCH configuration information, and then send uplink control information on the PUCCH resource. The uplink control information includes the first HARQ-ACK information and the second HARQ-ACK information. In this application, HARQ-ACK information of the multicast data and the unicast data can be effectively fed back.

## Description

This application claims priority to Chinese Patent Application No. 2021103557411, filed with the China National Intellectual Property Administration on April 1, 2021 and entitled "UPLINK CONTROL INFORMATION TRANSMISSION METHOD AND APPARATUS", which is incorporated herein by reference in its entirety.

### TECHNICAL FIELD

This application relates to the field of communication technologies, and in particular, to an uplink control information transmission method and an apparatus.

### BACKGROUND

For a unicast service, when a plurality of pieces of hybrid automatic repeat request-acknowledgment (hybrid automatic repeat request-acknowledgment, HARQ-ACK) information with a same priority exist in a same time unit, a terminal device may use the plurality of pieces of HARQ-ACK information with the same priority to form one HARQ-ACK codebook, and feed back the codebook by using a piece of physical uplink control channel (physical uplink control channel, PUCCH) configuration information corresponding to the HARQ-ACK information with the priority. When HARQ-ACK information with different priorities exists in a same time unit, the terminal device separately uses the HARQ-ACK information with the different priorities to form corresponding HARQ-ACK codebooks, and feeds back the corresponding HARQ-ACK codebooks based on PUCCH configuration information separately corresponding to the HARQ-ACK information with the different priorities. In other words, there is a binding relationship between a quantity of priorities of HARQ-ACK information and each of a quantity of HARQ-ACK codebooks and a quantity of pieces of PUCCH configuration information.

In a communication system, for example, a 5th-generation (5th-Generation, 5G) mobile communication system, to improve data transmission efficiency, a HARQ-ACK feedback mechanism is also introduced into a multicast service. In this way, a network device needs to separately configure PUCCH configuration information corresponding to the multicast service and PUCCH configuration information corresponding to the unicast service for the terminal device. However, in a same time unit, if HARQ-ACK information corresponding to the multicast service and HARQ-ACK information corresponding to the unicast service have a same priority, there is no binding relationship between a quantity of priorities of HARQ-ACK information and a quantity of pieces of PUCCH configuration information. Consequently, the terminal device cannot feed back HARQ-ACK information corresponding to the multicast service and the unicast service.

### SUMMARY

Embodiments of this application provide an uplink control information transmission method and an apparatus, to transmit at least one of HARQ-ACK information corresponding to multicast data and HARQ-ACK information corresponding to unicast data.

According to a first aspect, an embodiment of this application provides an uplink control information transmission method. In the method, a terminal device obtains first physical uplink control channel PUCCH configuration information corresponding to multicast data and second PUCCH configuration information corresponding to unicast data; receives a plurality of pieces of data from a network device, where the plurality of pieces of data include one or more pieces of multicast data and one or more pieces of unicast data, and first hybrid automatic repeat request-acknowledgement HARQ-ACK information corresponding to the one or more pieces of multicast data and second HARQ-ACK information corresponding to the one or more pieces of unicast data have a same priority and need to be fed back in a same time unit; then determines a PUCCH resource based on the first PUCCH configuration information or the second PUCCH configuration information; and sends uplink control information to the network device on the PUCCH resource, where the uplink control information includes the first HARQ-ACK information and the second HARQ-ACK information.

It can be learned that in this embodiment of this application, when the first hybrid automatic repeat request-acknowledgment HARQ-ACK information corresponding to the one or more pieces of multicast data and the second HARQ-ACK information corresponding to the one or more pieces of unicast data have the same priority and need to be fed back in the same time unit, the terminal device feeds back the first HARQ-ACK information and the second HARQ-ACK information by using the PUCCH resource determined based on the first PUCCH configuration information or the second PUCCH configuration information. In this way, HARQ-ACK feedback for the one or more pieces of multicast data and the one or more pieces of unicast data can be effectively implemented, thereby avoiding that the terminal device cannot transmit feedback information.

In an optional implementation, that the terminal device determines a PUCCH resource based on the first PUCCH configuration information or the second PUCCH configuration information includes: The terminal device determines the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information; or the terminal device determines the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information. In other words, PUCCH configuration information used by the terminal device to determine the PUCCH resource is the first PUCCH configuration information or the second PUCCH configuration information.

In another optional implementation, that the terminal device determines a PUCCH resource based on the first PUCCH configuration information or the second PUCCH configuration information includes: The terminal device determines the PUCCH resource based on a physical uplink control channel resource indicator PRI in last downlink control information DCI corresponding to the plurality of pieces of data and PUCCH configuration information corresponding to the last DCI, where the PUCCH resource belongs to a PUCCH resource set configured in the first PUCCH configuration information or belongs to a PUCCH resource set configured in the second PUCCH configuration information.

It can be learned that the terminal device may flexibly determine the PUCCH resource based on the PUCCH configuration information corresponding to the last DCI corresponding to the plurality of pieces of data.

In another optional implementation, that the terminal device determines a PUCCH resource based on the first PUCCH configuration information or the second PUCCH configuration information includes: The terminal device receives first indication information from the network device, where the first indication information indicates the terminal device to determine the PUCCH resource based on the first PUCCH configuration information or the second PUCCH configuration information; and when the first indication information indicates the terminal device to determine the PUCCH resource based on the first PUCCH configuration information, determines the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information; or when the first indication information indicates the terminal device to determine the PUCCH resource based on the second PUCCH configuration information, determines the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information.

It can be learned that the terminal device may select, based on the first indication information sent by the network device, PUCCH configuration information used when the PUCCH resource is determined.

In an optional implementation, when there is one piece of first PUCCH configuration information, a priority corresponding to the first PUCCH configuration information is a high priority. In other words, when there is one piece of PUCCH configuration information corresponding to the multicast data, a priority corresponding to the PUCCH configuration information of the multicast data is a high priority. This is different from a case in which when there is one piece of PUCCH configuration information corresponding to the unicast data, a priority corresponding to the PUCCH configuration information is a default low priority.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling. It can be learned that the priority corresponding to the first PUCCH configuration information may be flexibly configured at a physical layer of a communication system.

In an optional implementation, that a terminal device obtains first physical uplink control channel PUCCH configuration information corresponding to multicast data and second PUCCH configuration information corresponding to unicast data includes: The terminal device receives the first PUCCH configuration information and the second PUCCH configuration information from the network device.

According to a second aspect, this application further provides an uplink control information transmission method. In the method, a terminal device obtains first physical uplink control channel PUCCH configuration information corresponding to multicast data and second PUCCH configuration information corresponding to unicast data; then receives a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; then determines a first PUCCH resource based on the first PUCCH configuration information, and determines a second PUCCH resource based on the second PUCCH configuration information; and finally, sends at least one of first uplink control information and second uplink control information to the network device based on the first PUCCH resource and the second PUCCH resource, where the first uplink control information includes the first HARQ-ACK information, and the second uplink control information includes the second HARQ-ACK information.

It can be learned that in this embodiment of this application, when the first hybrid automatic repeat request-acknowledgment HARQ-ACK information corresponding to the one or more pieces of multicast data and the second HARQ-ACK information corresponding to the one or more pieces of unicast data have the same priority and need to be fed back in the same time unit, the terminal device may feed back at least one of the first HARQ-ACK information and the second HARQ-ACK information by using the first PUCCH resource determined based on the first PUCCH configuration information and the second PUCCH resource determined based on the second PUCCH configuration information, to avoid that the terminal device cannot transmit feedback information.

In an optional implementation, that the terminal device sends at least one of first uplink control information and second uplink control information to the network device based on the first PUCCH resource and the second PUCCH resource includes: When the first PUCCH resource and the second PUCCH resource do not overlap in time domain, the terminal device sends the first uplink control information to the network device on the first PUCCH resource, and sends the second uplink control information to the network device on the second PUCCH resource.

It can be learned that when the first PUCCH resource and the second PUCCH resource do not overlap in time domain, the terminal device separately feeds back the first HARQ-ACK information and the second HARQ-ACK information on the first PUCCH resource and the second PUCCH resource, to implement HARQ-ACK feedback for the one or more pieces of multicast data and the one or more pieces of unicast data.

In another optional implementation, that the terminal device sends at least one of first uplink control information and second uplink control information to the network device based on the first PUCCH resource and the second PUCCH resource includes: When the first PUCCH resource and the second PUCCH resource overlap in time domain, the terminal device sends the first uplink control information to the network device on the first PUCCH resource, or sends the second uplink control information to the network device on the second PUCCH resource.

It can be learned that when the first PUCCH resource and the second PUCCH resource overlap in time domain, the terminal device feeds back only one of the first HARQ-ACK information and the second HARQ-ACK information to the network device, to ensure that at least one piece of HARQ-ACK information is correctly fed back. In other words, this implementation implements HARQ-ACK feedback for the one or more pieces of multicast data, or HARQ-ACK feedback for the one or more pieces of unicast data.

In another optional implementation, that the terminal device sends the first uplink control information to the network device on the first PUCCH resource, or sends the second uplink control information to the network device on the second PUCCH resource includes: When a quantity of bits of the first uplink control information is greater than a quantity of bits of the second uplink control information, the terminal device sends the first uplink control information on the first PUCCH resource; or when a quantity of bits of the second uplink control information is greater than or equal to a quantity of bits of the first uplink control information, the terminal device sends the second uplink control information on the second PUCCH resource.

It can be learned that when the first PUCCH resource and the second PUCCH resource overlap in time domain, the terminal device sends only uplink control information with a larger quantity of bits in the first uplink control information and the second uplink control information to the network device, to ensure that HARQ-ACK information with a larger quantity of bits is fed back.

In another optional implementation, that the terminal device sends the first uplink control information to the network device on the first PUCCH resource, or sends the second uplink control information to the network device on the second PUCCH resource includes: When a quantity of bits of the first uplink control information is less than a quantity of bits of the second uplink control information, the terminal device sends the first uplink control information on the first PUCCH resource; or when a quantity of bits of the second uplink control information is less than or equal to a quantity of bits of the first uplink control information, the terminal device sends the second uplink control information on the second PUCCH resource.

It can be learned that when the first PUCCH resource and the second PUCCH resource overlap in time domain, the terminal device sends only uplink control information with a smaller quantity of bits in the first uplink control information and the second uplink control information to the network device, to ensure that HARQ-ACK information with a smaller quantity of bits is fed back, reduce PUCCH overheads occupied by the HARQ-ACK information, and reduce interference to another terminal device.

In another optional implementation, that the terminal device sends the first uplink control information to the network device on the first PUCCH resource, or sends the second uplink control information to the network device on the second PUCCH resource includes: When a time domain position of the first PUCCH resource is before a time domain position of the second PUCCH resource, the terminal device sends the first uplink control information on the first PUCCH resource; or when a time domain position of the second PUCCH resource is before a time domain position of the first PUCCH resource, the terminal device sends the second uplink control information on the second PUCCH resource.

It can be learned that when the first PUCCH resource and the second PUCCH resource overlap in time domain, the terminal device feeds back, to the network device only on a PUCCH resource whose time domain position is near a front, HARQ-ACK information corresponding to the PUCCH resource.

In another optional implementation, that the terminal device sends the first uplink control information to the network device on the first PUCCH resource, or sends the second uplink control information to the network device on the second PUCCH resource includes: When the first PUCCH resource is configured to be repeatedly sent, the terminal device sends the second uplink control information on the second PUCCH resource; or when the second PUCCH resource is configured to be repeatedly sent, the terminal device sends the first uplink control information on the first PUCCH resource.

It can be learned that when the first PUCCH resource and the second PUCCH resource overlap in time domain, the terminal device does not feed back HARQ-ACK information carried on a PUCCH resource configured to be repeatedly sent, but feeds back HARQ-ACK information carried on a PUCCH resource not configured to be repeatedly sent, to ensure that the HARQ-ACK information carried on the PUCCH resource not configured to be repeatedly sent is fed back.

In an optional implementation, when there is one piece of first PUCCH configuration information, a priority corresponding to the first PUCCH configuration information is a high priority. In other words, when there is one piece of PUCCH configuration information corresponding to the multicast data, a priority corresponding to the PUCCH configuration information is not a default low priority, but a high priority configured by the network device.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling. In other words, the priority corresponding to the first PUCCH configuration information is configured at a physical layer of a communication system.

In an optional implementation, that a terminal device obtains first physical uplink control channel PUCCH configuration information corresponding to multicast data and second PUCCH configuration information corresponding to unicast data includes: The terminal device receives the first PUCCH configuration information and the second PUCCH configuration information from the network device.

According to a third aspect, this application further provides an uplink control information transmission method. The uplink control information transmission method in this aspect corresponds to the uplink control information transmission method in the first aspect, and the uplink control information transmission method in this aspect is described from a network device side. In the method, a network device sends first physical uplink control channel PUCCH configuration information corresponding to multicast data and second PUCCH configuration information corresponding to unicast data to a terminal device; then sends a plurality of pieces of data to the terminal device, where the plurality of pieces of data include one or more pieces of multicast data and one or more pieces of unicast data, and first hybrid automatic repeat request-acknowledgement HARQ-ACK information corresponding to the one or more pieces of multicast data and second HARQ-ACK information corresponding to the one or more pieces of unicast data have a same priority and need to be fed back in a same time unit; then determines a PUCCH resource, where the PUCCH resource belongs to a PUCCH resource set configured in the first PUCCH configuration information or belongs to a PUCCH resource set configured in the second PUCCH configuration information; and finally, receives uplink control information from the terminal device on the PUCCH resource, where the uplink control information includes the first HARQ-ACK information and the second HARQ-ACK information.

It can be learned that in this embodiment of this application, when the first hybrid automatic repeat request-acknowledgment HARQ-ACK information corresponding to the one or more pieces of multicast data and the second HARQ-ACK information corresponding to the one or more pieces of unicast data have the same priority and need to be fed back in the same time unit, the network device may receive, on the PUCCH resource that belongs to the PUCCH resource set configured in the first PUCCH configuration information or the PUCCH resource set configured in the second PUCCH configuration information, the first HARQ-ACK information and the second HARQ-ACK information that are fed back by the terminal device, to avoid that the network device cannot receive feedback information.

In an optional implementation, the network device may further send a physical uplink control channel resource indicator PRI in DCI corresponding to a last piece of multicast data, where the PRI indicates the PUCCH resource, and the PUCCH resource is a resource in the PUCCH resource set configured in the first PUCCH configuration information. Alternatively, the network device sends a physical uplink control channel resource indicator PRI in DCI corresponding to a last piece of unicast data, where the PRI indicates the PUCCH resource, and the PUCCH resource is a resource in the PUCCH resource set configured in the second PUCCH configuration information.

It can be learned that the network device may indicate, to the terminal device by using the PRI in the DCI corresponding to the last piece of multicast data, that the PUCCH resource is a resource in the PUCCH resource set configured in the first PUCCH configuration information, or indicate, to the terminal device by using the PRI in the DCI corresponding to the last piece of unicast data, that the PUCCH resource is a resource in the PUCCH resource set configured in the second PUCCH configuration information.

In another optional implementation, the network device may further send a physical uplink control channel resource indicator PRI in last downlink control information DCI corresponding to the plurality of pieces of data, where the PRI indicates the PUCCH resource, and the PUCCH resource belongs to a PUCCH resource set configured in the second PUCCH configuration information, or the PUCCH resource belongs to a PUCCH resource set configured in the second PUCCH configuration information.

It can be learned that the network device may indicate, to the terminal device by using the PRI in the last DCI corresponding to the plurality of pieces of data, that the PUCCH resource belongs to the PUCCH resource set configured in the first PUCCH configuration information or the second PUCCH configuration information.

In another optional implementation, the network device may further send first indication information to the terminal device, where the first indication information indicates that the PUCCH resource belongs to a PUCCH resource set configured by using the first PUCCH configuration information or indicates that the PUCCH resource belongs to a PUCCH resource set configured by using the second PUCCH configuration information. When the first indication information indicates that the PUCCH resource belongs to the PUCCH resource set configured by using the first PUCCH configuration information, the network device sends a physical uplink control channel resource indicator PRI in last DCI corresponding to the one or more pieces of multicast data, where the PRI indicates the PUCCH resource. When the first indication information indicates that the PUCCH resource belongs to the PUCCH resource set configured by using the second PUCCH configuration information, the network device sends a physical uplink control channel resource indicator PRI in last DCI corresponding to the one or more pieces of unicast data, where the PRI indicates the PUCCH resource.

In other words, the network device may further indicate the PUCCH resource to the terminal device by using the first indication information.

In an optional implementation, when there is one piece of first PUCCH configuration information, a priority corresponding to the first PUCCH configuration information is a high priority. In other words, when there is one piece of PUCCH configuration information corresponding to the multicast data, a priority corresponding to the PUCCH configuration information is not a default low priority, but a high priority configured by the network device.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling. In other words, the priority corresponding to the first PUCCH configuration information is configured at a physical layer of a communication system.

According to a fourth aspect, this application further provides an uplink control information transmission method. The uplink control information transmission method in this aspect corresponds to the uplink control information transmission method in the second aspect, and the uplink control information transmission method in this aspect is described from a network device side. In the method, a network device sends first physical uplink control channel PUCCH configuration information corresponding to multicast data and second PUCCH configuration information corresponding to unicast data to a terminal device; then sends a plurality of pieces of data to the terminal device, where the plurality of pieces of data include one or more pieces of multicast data and one or more pieces of unicast data, and first hybrid automatic repeat request-acknowledgement HARQ-ACK information corresponding to the one or more pieces of multicast data and second HARQ-ACK information corresponding to the one or more pieces of unicast data have a same priority and need to be fed back in a same time unit; then determines a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information; and finally, receives at least one of first uplink control information and second uplink control information from the terminal device based on the first PUCCH resource and the second PUCCH resource, where the first uplink control information includes the first HARQ-ACK information, and the second uplink control information includes the second HARQ-ACK information.

It can be learned that in this embodiment of this application, when the first hybrid automatic repeat request-acknowledgment HARQ-ACK information corresponding to the one or more pieces of multicast data and the second HARQ-ACK information corresponding to the one or more pieces of unicast data have the same priority and need to be fed back in the same time unit, the network device may receive, based on a PUCCH resource that belongs to the PUCCH resource set configured in the first PUCCH configuration information or the PUCCH resource set configured in the second PUCCH configuration information, at least one of the first HARQ-ACK information and the second HARQ-ACK information that are fed back by the terminal device, to avoid that the network device cannot receive feedback information.

In an optional implementation, that the network device receives at least one of first uplink control information and second uplink control information from the terminal device based on the first PUCCH resource and the second PUCCH resource includes: When the first PUCCH resource and the second PUCCH resource do not overlap, the network device receives the first uplink control information from the terminal device on the first PUCCH resource, and receives the second uplink control information from the terminal device on the second PUCCH resource.

It can be learned that when the first PUCCH resource and the second PUCCH resource do not overlap, the network device receives the first uplink control information and the second uplink control information that are sent by the terminal device.

In another optional implementation, that the network device receives at least one of first uplink control information and second uplink control information from the terminal device based on the first PUCCH resource and the second PUCCH resource includes: When the first PUCCH resource and the second PUCCH resource overlap, the network device receives the first uplink control information from the terminal device on the first PUCCH resource, or receives the second uplink control information from the terminal device on the second PUCCH resource.

It can be learned that when the first PUCCH resource and the second PUCCH resource overlap, the network device receives the first uplink control information or the second uplink control information sent by the terminal device.

In another optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a quantity of bits of the first uplink control information is greater than a quantity of bits of the second uplink control information; or the network device receives the second uplink control information from the terminal device on the second PUCCH resource, where a quantity of bits of the second uplink control information is greater than or equal to a quantity of bits of the first uplink control information.

It can be learned that when the first PUCCH resource and the second PUCCH resource overlap, the network device receives uplink control information that is in the first uplink control information and the second uplink control information sent by the terminal device and that has a larger quantity of bits.

In another optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a quantity of bits of the first uplink control information is less than a quantity of bits of the second uplink control information; or the network device receives the second uplink control information from the terminal device on the second PUCCH resource, where a quantity of bits of the second uplink control information is less than or equal to a quantity of bits of the first uplink control information.

It can be learned that when the first PUCCH resource and the second PUCCH resource overlap, the network device receives uplink control information that is in the first uplink control information and the second uplink control information sent by the terminal device and that has a smaller quantity of bits.

In another optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a time domain position of the first PUCCH resource is before a time domain position of the second PUCCH resource; or the network device receives the second uplink control information from the terminal device on the second PUCCH resource, where a time domain position of the second PUCCH resource is before a time domain position of the first PUCCH resource.

It can be learned that when the first PUCCH resource and the second PUCCH resource overlap, the network device receives HARQ-ACK information that is fed back by the terminal device and that is carried on a PUCCH resource whose time domain position is near a front.

In another optional implementation, that the network device receives the first uplink control information from the terminal device on the first PUCCH resource, or receives the second uplink control information from the terminal device on the second PUCCH resource includes: The network device receives the second uplink control information from the terminal device on the second PUCCH resource, where the first PUCCH resource is configured to be repeatedly sent; or the network device receives the first uplink control information from the terminal device on the first PUCCH resource, where the second PUCCH resource is configured to be repeatedly sent.

It can be learned that when the first PUCCH resource and the second PUCCH resource overlap, the network device receives HARQ-ACK information that is fed back by the terminal device and that is carried on a PUCCH resource not configured to be repeatedly sent.

In an optional implementation, when there is one piece of first PUCCH configuration information, a priority corresponding to the first PUCCH configuration information is a high priority. In other words, when there is one piece of PUCCH configuration information corresponding to the multicast data, a priority corresponding to the PUCCH configuration information is not a default low priority, but a high priority configured by the network device.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling. In other words, the priority corresponding to the first PUCCH configuration information is configured at a physical layer of a communication system.

According to a fifth aspect, this application further provides an uplink control information transmission method. The uplink control information in this aspect is also described from a network device side. In the method, a network device determines first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities; and then sends the first PUCCH configuration information and the second PUCCH configuration information to a terminal device.

It can be learned that in this embodiment of this application, when the network device configures, for the terminal device, the first PUCCH configuration information corresponding to the multicast data and the second PUCCH configuration information corresponding to the unicast data, the first hybrid automatic repeat request-acknowledgment HARQ-ACK information corresponding to the multicast data and the second HARQ-ACK information corresponding to the unicast data have different priorities. In other words, the priorities corresponding to the first PUCCH configuration information and the second PUCCH configuration information that are configured by the network device are different, so that the terminal device may separately feed back, according to a principle of different priorities, the first HARQ-ACK information and the second HARQ-ACK information on a PUCCH resource determined based on the first PUCCH configuration information and a PUCCH resource determined based on the second PUCCH configuration information. This helps the network device and the terminal device consistently understand a HARQ-ACK feedback manner, thereby improving HARQ-ACK feedback efficiency.

Correspondingly, the terminal device side does not expect that the PUCCH configuration information corresponding to the received multicast data and the PUCCH configuration information corresponding to the received unicast data correspond a same priority. In this way, the terminal device may feed back feedback information corresponding to the multicast data and feedback information corresponding to the unicast data to the network device in a current manner of feeding back the feedback information corresponding to the unicast data. In other words, the feedback information corresponding to the multicast data and the unicast data are respectively sent by using the PUCCH resources determined based on the respective PUCCH configuration information corresponding to the multicast data and the unicast data. This implementation helps reduce complexity of the network device and the terminal device.

According to a sixth aspect, this application further provides a communication apparatus. The communication apparatus has some or all functions of the terminal device according to the first aspect, or has some or all functions of the terminal device according to the second aspect, or has some or all functions of the network device according to the third aspect, or has some or all functions of the network device according to the fourth aspect, or has some or all functions of the network device according to the fifth aspect. For example, functions of the communication apparatus may include functions of the terminal device according to the first aspect in some or all embodiments of this application, or may include functions of independently implementing any embodiment in this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit may be coupled to the processing unit and a transceiver unit, and the storage unit stores program instructions and data that are necessary for the communication apparatus.

In an implementation, the communication apparatus includes:
a processing unit, configured to obtain first physical uplink control channel PUCCH configuration information corresponding to multicast data and second PUCCH configuration information corresponding to unicast data; and
a communication unit, configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processing unit is further configured to determine a PUCCH resource based on the first PUCCH configuration information or the second PUCCH configuration information.

The communication unit is further configured to send uplink control information to the network device on the PUCCH resource, where the uplink control information includes the first HARQ-ACK information and the second HARQ-ACK information.

In addition, for another optional implementation of the communication apparatus in this aspect, refer to related content of the first aspect. Details are not described herein again.

In another implementation, the communication apparatus includes:
a processing unit, configured to obtain first physical uplink control channel PUCCH configuration information corresponding to multicast data and second PUCCH configuration information corresponding to unicast data; and
a communication unit, further configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processing unit is further configured to: determine a first PUCCH resource based on the first PUCCH configuration information, and determine a second PUCCH resource based on the second PUCCH configuration information.

The communication unit is further configured to send at least one of first uplink control information and second uplink control information to the network device based on the first PUCCH resource and the second PUCCH resource, where the first uplink control information includes the first HARQ-ACK information, and the second uplink control information includes the second HARQ-ACK information.

In addition, for another optional implementation of the communication apparatus in this aspect, refer to related content of the second aspect. Details are not described herein again.

In another implementation, the communication apparatus includes:
a communication unit, configured to send first physical uplink control channel PUCCH configuration information corresponding to multicast data and second PUCCH configuration information corresponding to unicast data to a terminal device, where
the communication unit is further configured to send a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processing unit, configured to determine a PUCCH resource, where the PUCCH resource belongs to a PUCCH resource set configured in the first PUCCH configuration information or belongs to a PUCCH resource set configured in the second PUCCH configuration information.

The communication unit is further configured to receive uplink control information from the terminal device on the PUCCH resource, where the uplink control information includes the first HARQ-ACK information and the second HARQ-ACK information.

In addition, for another optional implementation of the communication apparatus in this aspect, refer to related content of the third aspect. Details are not described herein again.

In another implementation, the communication apparatus includes:
a communication unit, configured to send first physical uplink control channel PUCCH configuration information corresponding to multicast data and second PUCCH configuration information corresponding to unicast data to a terminal device, where
the communication unit is further configured to send a plurality of pieces of data to a terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processing unit, configured to determine a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information.

The communication unit is further configured to receive at least one of first uplink control information and second uplink control information from the terminal device based on the first PUCCH resource and the second PUCCH resource, where the first uplink control information includes the first HARQ-ACK information, and the second uplink control information includes the second HARQ-ACK information.

In addition, for another optional implementation of the communication apparatus in this aspect, refer to related content of the fourth aspect. Details are not described herein again.

In another implementation, the communication apparatus includes:
a processing unit, configured to determine first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities; and
a communication unit, configured to send the first PUCCH configuration information and the second PUCCH configuration information to a terminal device.

In addition, for another optional implementation of the communication apparatus in this aspect, refer to related content of the fifth aspect. Details are not described herein again.

In an example, the transceiver unit may be a transceiver or a communication interface, the storage unit may be a memory, and the processing unit may be a processor.

In an implementation, the communication apparatus includes:
a processor, configured to obtain first physical uplink control channel PUCCH configuration information corresponding to multicast data and second PUCCH configuration information corresponding to unicast data; and
a communication interface, configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor is further configured to determine a PUCCH resource based on the first PUCCH configuration information or the second PUCCH configuration information.

The communication interface is further configured to send uplink control information to the network device on the PUCCH resource, where the uplink control information includes the first HARQ-ACK information and the second HARQ-ACK information.

In addition, for another optional implementation of the uplink communication apparatus in this aspect, refer to related content of the first aspect. Details are not described herein again.

In another implementation, the communication apparatus includes:
a processor, configured to obtain first physical uplink control channel PUCCH configuration information corresponding to multicast data and second PUCCH configuration information corresponding to unicast data; and
a communication interface, configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor is further configured to: determine a first PUCCH resource based on the first PUCCH configuration information, and determine a second PUCCH resource based on the second PUCCH configuration information.

The communication interface is further configured to send at least one of first uplink control information and second uplink control information to the network device based on the first PUCCH resource and the second PUCCH resource, where the first uplink control information includes the first HARQ-ACK information, and the second uplink control information includes the second HARQ-ACK information.

In addition, for another optional implementation of the communication apparatus in this aspect, refer to related content of the second aspect. Details are not described herein again.

In another implementation, the communication apparatus includes:
a communication interface, configured to send first physical uplink control channel PUCCH configuration information corresponding to multicast data and second PUCCH configuration information corresponding to unicast data to a terminal device, where
the communication interface is further configured to send a plurality of pieces of data to a terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processor, configured to determine a PUCCH resource, where the PUCCH resource belongs to a PUCCH resource set configured in the first PUCCH configuration information or belongs to a PUCCH resource set configured in the second PUCCH configuration information.

The communication interface is further configured to receive uplink control information from the terminal device on the PUCCH resource, where the uplink control information includes the first HARQ-ACK information and the second HARQ-ACK information.

In addition, for another optional implementation of the uplink communication apparatus in this aspect, refer to related content of the third aspect. Details are not described herein again.

In another implementation, the communication apparatus includes:
a communication interface, configured to send first physical uplink control channel PUCCH configuration information corresponding to multicast data and second PUCCH configuration information corresponding to unicast data to a terminal device, where
the communication interface is further configured to send a plurality of pieces of data to a terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processor, configured to determine a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information.

The communication interface is further configured to receive at least one of first uplink control information and second uplink control information from the terminal device based on the first PUCCH resource and the second PUCCH resource, where the first uplink control information includes the first HARQ-ACK information, and the second uplink control information includes the second HARQ-ACK information.

In addition, for another optional implementation of the communication apparatus in this aspect, refer to related content of the fourth aspect. Details are not described herein again.

In another implementation, the communication apparatus includes:
a processor, configured to determine first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities; and
a communication interface, configured to send the first PUCCH configuration information and the second PUCCH configuration information to a terminal device.

In addition, for another optional implementation of the communication apparatus in this aspect, refer to related content of the fifth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband related processing; and the transceiver may be configured to perform, for example, but not limited to, radio frequency receiving and sending. The components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, an increasing quantity of components may be integrated onto a same chip. For example, the digital baseband processor and a plurality of application processors (including but not limited to a graphics processing unit, a multimedia processor, and the like) may be integrated onto a same chip. Such a chip may be referred to as a system on a chip (System on a Chip, SoC). Whether the components are separately disposed on different chips or integrated and disposed on one or more chips usually depends on a requirement of a product design. Implementation forms of the components are not limited in embodiments of this application.

According to a seventh aspect, this application further provides a processor, configured to perform the foregoing methods. In a process of performing these methods, a process of sending the information and a process of receiving the information in the methods may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the input information, the transceiver receives the information, and inputs the information into the processor. Further, after the transceiver receives the information, other processing may need to be performed on the information before the information is input into the processor.

Based on the principle, for example, the sending uplink control information mentioned in the method may be understood as outputting the uplink control information by the processor.

Unless otherwise specified, or if operations such as transmitting, sending, and receiving related to the processor do not contradict an actual function or internal logic of the operations in related descriptions, all the operations may be more generally understood as operations such as outputting, receiving, and inputting of the processor, instead of operations such as transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

According to an eighth aspect, this application further provides a communication system. The system includes at least one terminal device and at least one network device in the foregoing aspects. In another possible design, the system may further include another device that interacts with the terminal device and the network device in the solutions provided in this application.

According to a ninth aspect, this application provides a computer-readable storage medium, configured to store instructions. When the instructions are executed by a communication apparatus, the method according to any one of the first aspect to the fifth aspect is implemented.

According to a tenth aspect, this application further provides a computer program product including instructions. When the computer program product runs on a communication apparatus, the communication apparatus is enabled to perform the method according to any one of the first aspect to the fifth aspect.

According to an eleventh aspect, this application provides a chip system. The chip system includes a processor and an interface. The interface is configured to obtain a program or instructions. The processor is configured to invoke the program or the instructions to implement or support a terminal device in implementing a function in the first aspect, or is configured to invoke the program or the instructions to implement or support a terminal device in implementing a function in the second aspect, or is configured to invoke the program or the instructions to implement or support a network device in implementing a function in the third aspect, or is configured to invoke the program or the instructions to implement or support a network device in implementing a function in the fourth aspect, or is configured to invoke the program or the instructions to implement or support a network device in implementing a function in the fifth aspect. For example, at least one of data and information in the methods is determined or processed. In a possible design, the chip system further includes a memory. The memory is configured to store program instructions and data that are necessary for the terminal. The chip system may include a chip, or may include a chip and another discrete component.

### BRIEF DESCRIPTION OF DRAWINGS

FIG. 1 is a schematic diagram of a structure of a communication system according to an embodiment of this application;
FIG. 2 is a schematic diagram of downlink scheduling according to an embodiment of this application;
FIG. 3 is a schematic diagram of determining a feedback time unit according to an embodiment of this application;
FIG. 4 is another schematic diagram of determining a feedback time unit according to an embodiment of this application;
FIG. 5 is a schematic diagram of a PDSCH time domain resource according to an embodiment of this application;
FIG. 6 is a schematic diagram of scheduling a plurality of pieces of data by a network device according to an embodiment of this application;
FIG. 7A and FIG. 7B are a schematic flowchart of an uplink control information transmission method according to an embodiment of this application;
FIG. 8 is a schematic diagram of determining a PUCCH resource according to an embodiment of this application;
FIG. 9 is another schematic diagram of determining a PUCCH resource according to an embodiment of this application;
FIG. 10A and FIG. 10B are a schematic flowchart of another uplink control information transmission method according to an embodiment of this application;
FIG. 11a is a schematic diagram of a first PUCCH resource and a second PUCCH resource according to an embodiment of this application;
FIG. 11b is another schematic diagram of a first PUCCH resource and a second PUCCH resource according to an embodiment of this application;
FIG. 11c is another schematic diagram of a first PUCCH resource and a second PUCCH resource according to an embodiment of this application;
FIG. 12 is a schematic flowchart of another uplink control information transmission method according to an embodiment of this application;
FIG. 13 is a schematic diagram of a structure of a communication apparatus according to an embodiment of this application;
FIG. 14 is a schematic diagram of a structure of another communication apparatus according to an embodiment of this application; and
FIG. 15 is a schematic diagram of a structure of a chip according to an embodiment of this application.

### DESCRIPTION OF EMBODIMENTS

The following clearly and completely describes technical solutions in embodiments of this application with reference to the accompanying drawings in embodiments of this application.

First, to better understand the uplink control information transmission method disclosed in embodiments of this application, a communication system to which embodiments of this application are applicable is described.

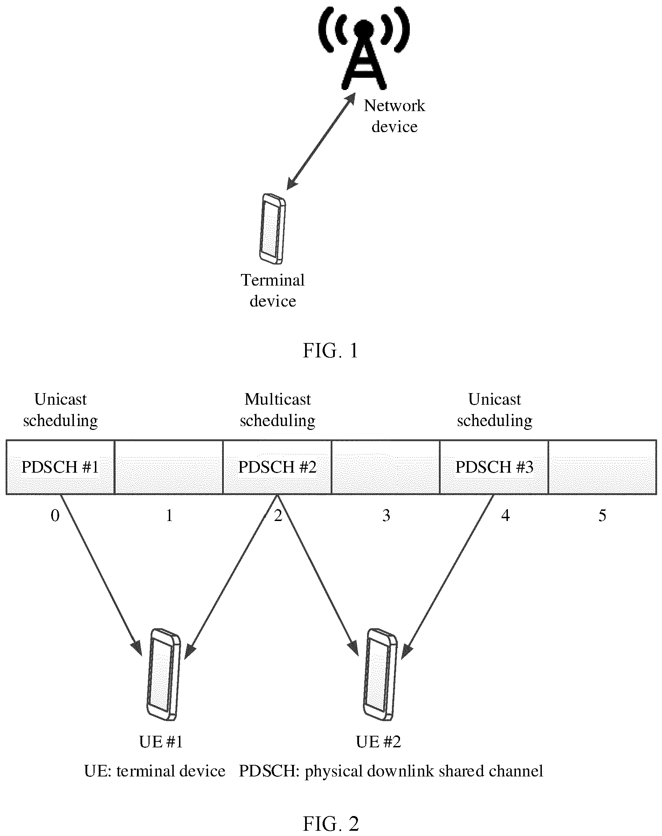

FIG. 1 is a schematic diagram of a structure of a communication system according to an embodiment of this application. The communication system may include but is not limited to one network device and one terminal device. Quantities and forms of devices shown in FIG. 1 are used as examples, and do not constitute a limitation on embodiments of this application. In actual application, two or more network devices and two or more terminal devices may be included. The communication system shown in FIG. 1 is described by using an example in which there is one network device and one terminal device, and the network device can provide a service for the terminal device. In FIG. 1, an example in which the network device is a base station and the terminal device is a mobile phone is used. The technical solutions in embodiments of this application may be applied to various communication systems, for example, a 4th-generation (4th-generation, 4G) mobile communication system, a 5th-generation (5th-generation, 5G) mobile communication system, a 6th-generation (6th-generation, 6G) mobile communication system. With continuous development of communication technologies, the technical solutions in embodiments of this application may be further applied to a subsequent evolved communication system, for example, a 7th-generation (7th-generation, 7G) mobile communication system.

In embodiments of this application, the network device is an entity configured to transmit or receive a signal on a network side, and the network device may be a device having a wireless transceiver function or a chip that may be disposed in the device. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home network device (for example, a home evolved NodeB, or a home NodeB, HNB), a baseband unit (baseband unit, BBU), or an access point (access point, AP), a wireless relay node, a wireless backhaul node, a transmission point (transmission and reception point, TRP, or transmission point, and TP), or the like in a wireless fidelity (wireless fidelity, Wi-Fi) system; or may be a device used in a 4G, 5G, or even 6G system, for example, a gNB or a transmission point (TRP or TP) in an NR system, or one antenna panel or a group of antenna panels (including a plurality of antenna panels) of a network device in a 4G system; or may be a network node that constitutes a gNB or a transmission point, for example, a baseband unit (BBU), a distributed unit (distributed unit, DU), a central unit (central unit, CU), a picocell (Picocell), a femtocell (Femtocell), or a road side unit (road side unit, RSU) in an intelligent driving scenario.

In embodiments of this application, the terminal device is an entity configured to receive or transmit a signal on a terminal side, and the terminal device may be a device having a wireless transceiver function or a chip that may be disposed in the device. The terminal device may also be referred to as user equipment (user equipment, UE), a terminal, an access terminal, a subscriber unit, a subscriber station, a mobile station, a remote station, a remote terminal, a mobile device, a user terminal, a user agent, or a user apparatus, and may be applied to a 4G, 5G, or even 6G system. The terminal in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an RSU of the wireless terminal type, or the like.

Embodiments of this application may be applied to a communication scenario in which a network device schedules multicast data for a terminal device, and also schedules unicast data for the terminal device, and hybrid automatic repeat request (hybrid automatic repeat request, HARQ)-acknowledgement (ACK) information corresponding to the scheduled multicast data and HARQ-ACK information corresponding to the scheduled unicast data are fed back in a same time unit.

For ease of understanding of embodiments disclosed in this application, the following two points are described.
(1) In embodiments disclosed in this application, an NR network scenario in a wireless communication network is used as an example of scenarios for description. It should be noted that the solutions in embodiments disclosed in this application may be further applied to another wireless communication network, and a corresponding name may also be replaced with a name of a corresponding function in the another wireless communication network.
(2) Aspects, embodiments, or features of this application are presented in embodiments disclosed in this application by describing a system that includes a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may further be used.

Related concepts in embodiments of this application are then briefly described.

### 1. Feedback information

In this application, the feedback information is hybrid automatic repeat request HARQ-ACK information. The HARQ-ACK information is used for a fast retransmission of lost or erroneous data. For example, after receiving a transmitted physical downlink shared channel (physical downlink shared channel, PDSCH), a terminal determines HARQ-ACK information transmitted on the PDSCH, for example, acknowledgement ACK information/negative acknowledgement NACK information, and sends the HARQ-ACK information to a network device, so that the network device determines whether the PDSCH needs to be retransmitted.

### 2. Time unit

The time unit may be one or more radio frames, one or more subframes, one or more slots, one or more mini-slots (mini-slot), one or more orthogonal frequency division multiplexing (orthogonal frequency division multiplexing, OFDM) symbols or discrete Fourier transform spread orthogonal frequency division multiplexing (discrete Fourier transform spread orthogonal frequency division multiplexing, DFT-S-OFDM) symbols, or the like, or may be a time window including a plurality of frames or subframes, for example, a system information (system information, SI) window. For example, a time domain resource occupied by one PDSCH transmission is one or more OFDM symbols, one or more DFT-S-OFDM symbols, or one or more mini-slots. One mini-slot may include a plurality of OFDM symbols or DFT-S-OFDM symbols. The time unit in embodiments of this application is configured by a network device for a terminal device, and may be one slot, two symbols, seven symbols, or the like.

### 3. Unicast scheduling, multicast scheduling, unicast data, and multicast data

The unicast scheduling means that a network device performs one-to-one scheduling on a terminal device. To be specific, the network device allocates a cell radio network temporary identifier (cell radio network temporary identifier, C-RNTI) to UE, and the UE receives data based on downlink control information (downlink control information, DCI) scrambled by using the C-RNTI.

The multicast scheduling means that a network device performs one-to-many scheduling on terminal devices. To be specific, when a plurality of UEs receive a same data service, the network device allocates a same group radio network temporary identifier (group radio network temporary identifier, G-RNTI) to the UEs, and different UEs receive the same data service based on DCI scrambled by using the same G-RNTI.

The unicast data is downlink data transmitted by a network device to LTE in a unicast scheduling manner.

The multicast data is downlink data transmitted by a network device to LTE in a multicast scheduling manner.

When the network device serves a large quantity of UEs, compared with those in the multicast scheduling manner, more downlink transmission resources are occupied in the unicast scheduling manner. Therefore, in this case, the network device may use the multicast scheduling manner to reduce downlink resources. In addition, for a single UE, the network device may allocate a C-RNTI to the UE to receive unicast data, and may also allocate a G-RNTI to the UE to receive multicast data.

For example, in a schematic diagram of downlink scheduling shown in FIG. 2, a PDSCH #1 in a downlink slot 0 is scheduled by the network device to UE #1 in a unicast manner, a PDSCH #2 in a downlink slot 2 is scheduled by the network device to the UE #1 and UE #2 in a multicast manner, and a PDSCH #3 in a downlink slot 4 is scheduled by the network device to the UE #2 in a unicast manner.

### 4. HARQ-ACK information feedback

In a new radio (new radio, NR) system, a HARQ-ACK mechanism is used in the foregoing unicast scheduling, to ensure transmission reliability. A downlink transmission is used as an example. A bit field of a time domain resource configuration in DCI that is scrambled by using a C-RNTI and that is received by UE indicates time domain information of a scheduled PDSCH, including a start symbol of a time domain resource, a time domain length, and the like. Therefore, the UE receives the PDSCH based on the bit field. If the UE receives the PDSCH correctly, the UE feeds back an ACK. If the UE receives the PDSCH incorrectly, the UE feeds back a NACK. Specifically, the UE generates a HARQ-ACK codebook based on HARQ-ACK information corresponding to a PDSCH scheduled by a network device in a time unit, and sends the HARQ-ACK codebook to the network device, to implement feedback of the HARQ-ACK information. The following describes a process in which the UE feeds back the HARQ-ACK information.

### (A) Determining a feedback time unit

Determining the feedback time unit by the UE means to determine an *n*+*k*1 timing relationship between receiving downlink data and feeding back HARQ-ACK information to the network device. Herein, n represents a time unit in which the terminal device receives a PDSCH, k1 represents a time unit between the time unit in which the terminal device receives the PDSCH and a time unit in which a corresponding ACK/NACK is fed back, and a value of *k*1 is indicated by the network device to the terminal device by using DCI.

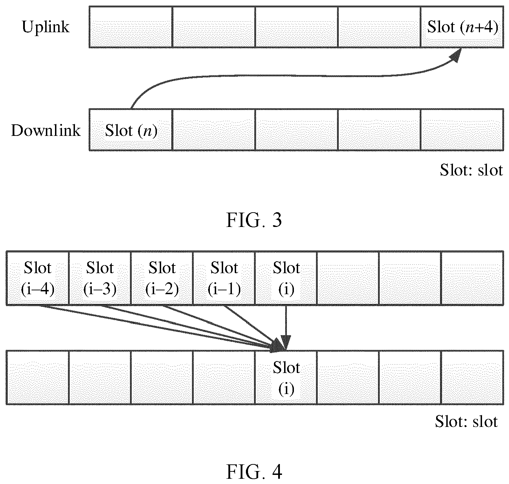

For example, as shown in FIG. 3, the UE receives a PDSCH in a slot (*n*)*.* If *k*1 indicated by the network device is equal to 4, the UE needs to feed back HARQ-ACK information to the network device in a slot (n+4).

### (B) Generating the HARQ-ACK codebook

The UE feeds back the HARQ-ACK information by using the HARQ-ACK codebook. A HARQ-ACK codebook mode configured by the network device for the UE includes a semi-static codebook mode and a dynamic codebook mode, so that the LTE may generate a corresponding HARQ-ACK codebook based on the configured codebook mode, to implement feedback of the HARQ-ACK information.

Processes of generating a semi-static HARQ-ACK codebook and a dynamic HARQ-ACK codebook are separately described in the following by using an example in which the UE determines to send feedback information in the slot (n+4), where it is assumed that the slot (n+4) is a slot (i), and the LTE generates a HARQ-ACK codebook in the slot (i) based on all ACKs/NACKs that need to be fed back.

### a. Process of generating the semi-static HARQ-ACK codebook.

If the UE is configured to be in the semi-static HARQ-ACK codebook mode, which is also referred to as a type 1 HARQ codebook, the UE generates a semi-static HARQ-ACK codebook based on all HARQ-ACK information that needs to be fed back. First, the UE determines a *k1* set, where the *k1* set includes a plurality of *k*1 values configured by the network device for the LTE. Then, the LTE determines, based on the *k*1 set and in a backward manner from the slot (i), positions of all slots whose HARQ-ACK feedback information is sent in the slot (i). For example, as shown in FIG. 4, the k1 set is {0, 1, 2, 3, 4}. In this case, starting from the slot (i), the UE may determine, based on the k1 set, that HARQ-ACK information of all data in a slot (i-4), a slot (i-3), a slot (i-2), a slot (i-1), and the slot (i) is fed back in the slot (i).

To be specific, if the LTE receives one piece of downlink DCI in each of the slot (i-4), the slot (i-3), the slot (i-2), the slot (i-1), and the slot (i), and k1 indicated by each piece of DCI indicates the slot (i), HARQ-ACK information in all of the slot (i-4), the slot (i-3), the slot (i-2), the slot (i-1), and the slot (i) needs to be fed back in the slot (i), and for a slot in which no PDSCH transmission is scheduled in the slot (i-4) to the slot (i), a NACK is fed back in the slot (i). Specifically, the UE determines a quantity of bits fed back in each slot in the following process.

First, the LTE determines an occasion (occasion) of the PDSCH in the slot (i-4), the slot (i-3), the slot (i-2), the slot (i-1), and the slot (i). A table of PDSCH time domain resources configured by the network device for the LTE includes a maximum of 16 rows, and each row indicates a start symbol S of one time domain resource and a quantity L of symbols in the time domain resource. S is used to identify a position of a time domain symbol occupied by data in a slot, and L indicates a time domain length occupied starting from the start symbol S. The UE performs segmentation on overlapped valid (S, L) of PDSCH time domain resources, to determine the quantity of bits fed back in each slot. Specifically, the UE performs segmentation based on an earliest end symbol in the time domain resources, and then associates all valid (S, L) with a PDSCH candidate occasion after the segmentation. Each PDSCH candidate occasion is associated with one or more (S, L) that overlap in time domain. A maximum of one piece of feedback information can be transmitted in these (S, L) that overlap in time domain. Therefore, each PDSCH candidate occasion corresponds to one ACK/NACK. The valid (S, L) is a position of a PDSCH determined in a time unit.

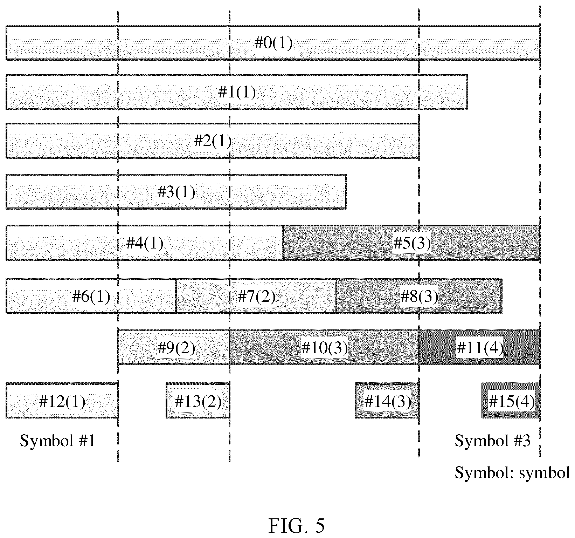

For example, a PDSCH time domain resource configured by the network device is shown in FIG. 5. The PDSCH time domain resource has 16 values, which respectively correspond to a time domain resource #0 to a time domain resource #15. It is assumed that all the time domain resources are valid (S, L). In this case, the LTE performs valid segmentation on the 16 time domain resources, and a segmentation position is a dashed line shown in FIG. 5. After the LTE performs segmentation, four PDSCH candidate occasions are obtained, which correspond to numbers in parentheses, and respectively include time domain resources {#0, #1, #2, #3, #4, #6, #12}, {#7, #9, #13}, {#5, #8, #10, #14}, and {#11, #15}. Each of the four groups of time domain resources corresponds to a feedback information bit. Because PDSCH time domain resources cannot overlap, a PDSCH exists on only one time domain resource in each group, and feedback information corresponding to the time domain resource is feedback information corresponding to a time domain resource group in which the time domain resource is located. It is assumed that 1 bit of feedback information is fed back on each PDSCH. In this case, 4 bits of feedback information are sent on the four groups of time domain resources, and each 1 bit is any time domain resource in the group of time domain resources. For example, a time domain resource corresponding to 1 bit fed back on the first group is one of the time domain resources {#0, #1, #2, #3, #4, #6, #12}.

After determining a quantity of bits that need to be fed back, the UE concatenates feedback information of a plurality of PDSCH candidate occasions associated with the slot (i), where each PDSCH candidate occasion corresponds to an ACK/NACK of the PDSCH candidate occasion, and then forms a final HARQ-ACK codebook.

### b. Process of generating the dynamic HARQ-ACK codebook.

If the UE is configured to be in the dynamic HARQ-ACK codebook mode, which is also referred to as a type 2 HARQ codebook, the UE generates the dynamic HARQ-ACK codebook.

If a physical downlink control channel (physical uplink control channel, PDCCH) received by the UE indicates to perform feedback in the slot (i), the HARQ-ACK codebook in the slot (i) includes feedback information of a PDSCH scheduled by the PDCCH. The UE arranges the HARQ-ACK information based on a receiving order of the PDCCH, and generates the HARQ-ACK codebook, that is, generates feedback information having scheduling information.

If the PDSCH received by the UE has no scheduling information, that is, the PDSCH is a semi-statically scheduled PDSCH, the LTE adds M bits after the HARQ-ACK information having scheduling information, to feed back feedback information corresponding to the PDSCH having no scheduling information. M is a positive integer greater than 1.

In other words, if the network device configures the dynamic HARQ-ACK codebook for the UE, the UE generates the HARQ-ACK codebook based on the scheduled PDSCH, that is, feeds back only the scheduled PDSCH.

### 5. Relationship between physical uplink control channel (physical uplink control channel, PUCCH) configuration information and a priority of HARQ-ACK information

In a unicast scheduling service, HARQ-ACK information of a scheduled PDSCH has two priorities: a low priority and a high priority. The priority of the HARQ-ACK information is configured by a network device for UE. The two priorities respectively correspond to an enhanced mobile broadband (enhanced mobile broadband, eMBB) data service and an ultra-reliable low-latency communication (ultra-reliable low-latency communication, URLLC) data service. Correspondingly, the network device may configure one piece of PUCCH configuration information or two pieces of PUCCH configuration information for the UE, where the PUCCH configuration information refers to PUCCH-config. The UE may determine, based on the PUCCH configuration information, a resource for feeding back the HARQ-ACK information.

When the network device configures only one piece of PUCCH configuration information for the UE, it indicates that the UE receives only the eMBB data service, and HARQ-ACK information corresponding to eMBB data has a default low priority. It may also be understood that HARQ-ACK information corresponding to the PUCCH configuration information has a low priority. If the network device configures two pieces of PUCCH configuration information for the UE, it indicates that the UE receives both the eMBB data service and the URLLC data service. HARQ-ACK information corresponding to PUCCH configuration information configured for the eMBB data service has a low priority, and HARQ-ACK information corresponding to PUCCH configuration information configured for the URLLC data service has a high priority.

It may be understood that the low priority and the high priority of the HARQ-ACK information is for data of different services, and are absolute priorities corresponding to the data of the different services. In addition, the low priority of the HARQ-ACK information is a physical layer priority configured by the network device for the UE.

### 6. PUCCH configuration information

As described above, a network device may configure a maximum of two pieces of PUCCH configuration information for a unicast service of UE. In addition, the network device may also configure PUCCH configuration information for a multicast service of the UE, and the configuration information is PUCCH configuration information independent of that of the unicast service.

Regardless of whether a service is a unicast service or a multicast service, PUCCH configuration information of the service may include the following information.
(a) *k1* set: The *k1* set indicates, to the UE, a time unit in which HARQ-ACK feedback is performed on a PDSCH. It may also be understood that the LTE maps a value of a *k*1 indication field "PDSCH-to-HARQ_feedback timing indicator" to a value in "dl-DataToUL-ACK", to determine feedback time of HARQ-ACK information of the PDSCH.

Optionally, if the network device does not configure the *k*1 set in PUCCH configuration information, the UE determines, by using a default value, a feedback time unit of HARQ-ACK information of a PDSCH.

(b) PUCCH resource set (PUCCH resource set): The PUCCH resource set is used by the UE to determine a PUCCH resource for feeding back the HARQ-ACK information. The network device may configure a maximum of four PUCCH resource sets for the UE, and each PUCCH resource set includes one or more PUCCH resources (PUCCH resource). The UE may determine one PUCCH resource set from the four PUCCH resource sets based on a size of the HARQ-ACK information or a size of the HARQ-ACK codebook.

Each PUCCH resource set further includes a resource list (resource list). The resource list includes one or more PUCCH resource identifiers (PUCCH resource identification). The UE may determine each PUCCH resource by using each PUCCH resource identifier.

(c) PUCCH resource: The network device may allocate a maximum of 32 PUCCH resources to the UE, and each PUCCH resource has a corresponding PUCCH resource identifier. The UE may map a value of a physical uplink control channel resource indicator (PUCCH resource indicator, PRI) to a PUCCH resource identifier in a PUCCH resource set, to determine a PUCCH resource.

(d) Format (format): PUCCH configuration information has five PUCCH formats in total, which are formats (0, 1, 2, 3, 4). Configurations of the formats 0 and 1 include an initial cyclic shift and a time domain symbol length and a time domain start position of a PUCCH resource. Configurations of the formats 2 to 4 include a quantity of physical resource blocks (physical resource block, PRB) occupied by a PUCCH resource and a time domain symbol length and a time domain start position of the PUCCH resource.

### 7. Last DCI (last DCI), last DCI corresponding to one or more pieces of multicast data, last DCI corresponding to one or more pieces of unicast data, last DCI corresponding to one or more pieces of multicast data and one or more pieces of unicast data, and last DCI corresponding to a plurality of pieces of data

In an implementation, the last DCI is last DCI sent by a network device when the network device schedules a plurality of pieces of data for LTE, and correspondingly, is last DCI received by the UE. In another implementation, the last DCI is DCI used for scheduling a last piece of data when a network device schedules a plurality of pieces of data. Results of the two implementations may be the same or different. A specific implementation is not limited in embodiments of this application. It may be understood that the last DCI is a last piece of DCI in a plurality of pieces of DCI whose corresponding feedback information is located in a same time unit. If there is only one piece of DCI whose corresponding feedback information is located in a same time unit, the DCI is equivalent to the last DCI.

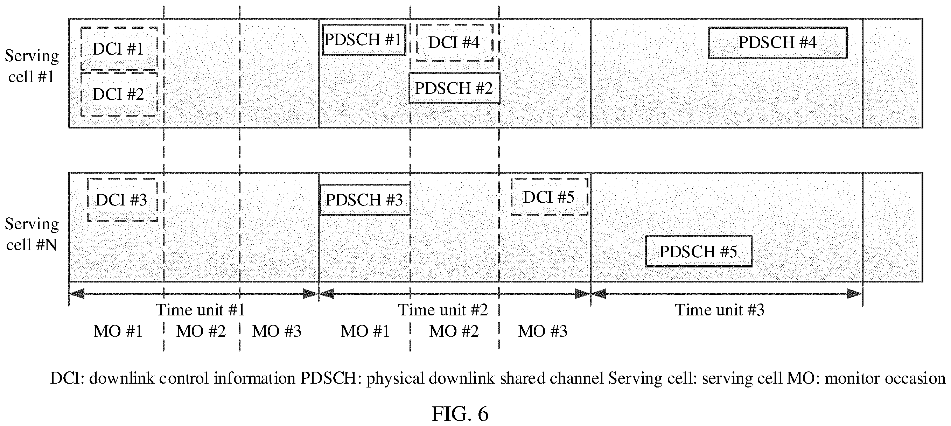

For example, a plurality of pieces of data scheduled by the network device for the UE are shown in FIG. 6. It can be learned from FIG. 6 that scheduling performed by the network device on the UE includes scheduling of multicast data PDSCH #2 and PDSCH #5, and scheduling of unicast data PDSCH #1, PDSCH #3, and PDSCH #4. In addition, DCI #1 is used to schedule the PDSCH #1, DCI #2 is used to schedule the PDSCH #2, DCI #3 is used to schedule the PDSCH #3, DCI #4 is used to schedule the PDSCH #4, and DCI #5 is used to schedule the PDSCH #5. It is assumed that the UE determines that the PDSCH #1 to the PDSCH #5 are all fed back in a time unit #3. In this case, the LTE determines that last DCI of a feedback resource is in the DCI #1 to the DCI #5. The LTE attempts to receive DCI in each serving cell (Serving Cell) on a monitor occasion (monitor occasion, MO), for example, in ascending order of an index of the serving cell (Serving Cell). Then, this manner is repeated on a next MO. In other words, the UE receives the DCI in a sequence of frequency domain first and then time domain. Therefore, a sequence in which the UE receives the DCI in FIG. 6 is: first receiving the DCI #1, the DCI #2, and the DCI #3, then receiving the DCI #4, and then receiving the DCI #5. Therefore, the last DCI is the DCI #5.

In an implementation, the last DCI corresponding to the one or more pieces of multicast data is last DCI sent by the network device when the network device schedules the one or more pieces of multicast data, and correspondingly, is last DCI received by the UE. In another implementation, the last DCI corresponding to the one or more pieces of multicast data is DCI used for scheduling a last piece of multicast data when the network device schedules the one or more pieces of multicast data. Results of the two implementations may be the same or different. A specific implementation is not limited in embodiments of this application. For example, in FIG. 6, when the network device schedules the multicast data PDSCH #2 and PDSCH #5, the last DCI received by the UE is the DCI #5. Therefore, the last DCI corresponding to the one or more pieces of multicast data is the DCI #5.

In an implementation, the last DCI corresponding to the one or more pieces of unicast data is last DCI sent by the network device when the network device schedules the one or more pieces of unicast data, and correspondingly, is last DCI received by the UE. For example, in FIG. 6, when the network device schedules the unicast data PDSCH #1, PDSCH #3, and PDSCH #4, the last DCI received by the UE is the DCI #4. Therefore, the last DCI corresponding to the one or more pieces of unicast data is the DCI #4.

The last DCI corresponding to the plurality of pieces of data or the last DCI corresponding to the one or more pieces of multicast data and the one or more pieces of unicast data is last DCI sent by the network device when the network device schedules the plurality of pieces of data or the one or more pieces of multicast data and the one or more pieces of unicast data, and also last DCI received by the UE. For example, as shown in FIG. 6, if the network device schedules a plurality of pieces of data, and the last DCI received by the UE is the DCI #5, last DCI corresponding to the plurality of pieces of data is the DCI #5.

Currently, for a unicast scheduling service, when there are a plurality of pieces of HARQ-ACK information with a same priority in a same time unit, the terminal device forms one HARQ-ACK codebook by using the plurality of pieces of HARQ-ACK information with the same priority, and feeds back the codebook by using a PUCCH resource determined based on one piece of PUCCH configuration information corresponding to the plurality of pieces of HARQ-ACK information with the same priority. When there are two pieces of HARQ-ACK information with different priorities, the terminal device forms two codebooks with different priorities by using the two pieces of HARQ-ACK information with different priorities, and feeds back the two codebooks or feeds back a codebook with a higher priority by using two PUCCH resources determined based on two pieces of different PUCCH configuration information corresponding to the two pieces of HARQ-ACK information. In other words, there is a binding relationship between a quantity of priorities of HARQ-ACK information and each of a quantity of HARQ-ACK codebooks and a quantity of pieces of PUCCH configuration information. To be specific, one piece of PUCCH configuration information corresponds to a priority of one piece of HARQ-ACK information, corresponds to one HARQ-ACK codebook, and is correspondingly used to send one PUCCH (also referred to as sending one piece of uplink control information, which is applicable to the following content). Two pieces of PUCCH configuration information correspond to priorities of two pieces of HARQ-ACK information, corresponds to two HARQ-ACK codebooks, and are correspondingly used to send two PUCCHs (when two PUCCH resources do not overlap).

In a communication system, for example, a 5G system, to improve data transmission efficiency, a HARQ-ACK feedback mechanism is also introduced into a multicast service. In this way, the network device needs to separately configure PUCCH configuration information corresponding to the multicast service and PUCCH configuration information corresponding to the unicast service for the terminal device. However, in a same time unit, if HARQ-ACK information corresponding to the multicast service and HARQ-ACK information corresponding to the unicast service have a same priority, there is no binding relationship between the quantity of priorities of HARQ-ACK information and the quantity of pieces of PUCCH configuration information. Consequently, the terminal device feeds back and sends HARQ-ACK information corresponding to the multicast service and the unicast service, thereby affecting HARQ-ACK feedback efficiency.

An embodiment of this application provides an uplink control information transmission method 100. In the uplink control information transmission method 100, a terminal device obtains first physical uplink control channel PUCCH configuration information corresponding to multicast data and second PUCCH configuration information corresponding to unicast data; receives a plurality of pieces of data from a network device, where the plurality of pieces of data include one or more pieces of multicast data and one or more pieces of unicast data, and first hybrid automatic repeat request-acknowledgement HARQ-ACK information corresponding to the one or more pieces of multicast data and second HARQ-ACK information corresponding to the one or more pieces of unicast data have a same priority and need to be fed back in a same time unit; then determines a PUCCH resource based on the first PUCCH configuration information or the second PUCCH configuration information; and finally sends uplink control information to the network device on the PUCCH resource, where the uplink control information includes the first HARQ-ACK information and the second HARQ-ACK information. It can be learned that the terminal device feeds back, according to a principle of same HARQ-ACK information priorities, the first HARQ-ACK information and the second HARQ-ACK information on the PUCCH resource determined based on the first PUCCH configuration information or the second PUCCH configuration information.

An embodiment of this application further provides an uplink control information transmission method 200. Compared with that in the uplink control information transmission method 100, in the uplink control information transmission method 200, a terminal device sends at least one of first uplink control information and second uplink control information based on a first PUCCH resource determined based on first PUCCH configuration information and a second PUCCH resource determined based on second PUCCH configuration information, where the first uplink control information includes first HARQ-ACK information, and the second uplink control information includes second HARQ-ACK information. It can be learned that the terminal device feeds back at least one of the first HARQ-ACK information and the second HARQ-ACK information on the first PUCCH resource and the second PUCCH resource according to a principle that the first PUCCH configuration information corresponding to multicast data is different from the second PUCCH configuration information corresponding to unicast data.

An embodiment of this application further provides an uplink control information transmission method 300. Compared with that in the uplink control information transmission method 100 and the uplink control information transmission method 200, in the uplink control information transmission method 300, when a terminal device configures first PUCCH configuration information corresponding to multicast data and second PUCCH configuration information corresponding to unicast data, the terminal device does not expect that first HARQ-ACK information corresponding to the multicast data and second HARQ-ACK information corresponding to the unicast data have a same priority. Therefore, when a network device configures the first PUCCH configuration information and the second PUCCH configuration information for the terminal device, the first HARQ-ACK information and the second HARQ-ACK information have different priorities. In this way, the terminal device may separately feed back, according to a principle of different priorities, the first HARQ-ACK information and the second HARQ-ACK information on the first PUCCH resource determined based on the first PUCCH configuration information and the second PUCCH resource determined based on the second PUCCH configuration information. This helps the network device and the terminal device consistently understand a HARQ-ACK feedback manner, thereby improving HARQ-ACK feedback efficiency.

The following describes embodiments of this application and related implementations with reference to the accompanying drawings. It may be understood that, in the following methods, steps of a network device may be implemented by different functional entities that form the network device. In other words, the functional entities that perform the steps of the network device may be located in different physical entities. For example, a sending or receiving action of the network device may be performed by a radio frequency (radio frequency, RF) unit, a radio remote unit (radio remote unit, RRU), or an active antenna unit (active antenna unit, AAU) of the network device. A processing action of the network device may be performed by a central unit CU of the network device, or the like. This is not limited in this application.

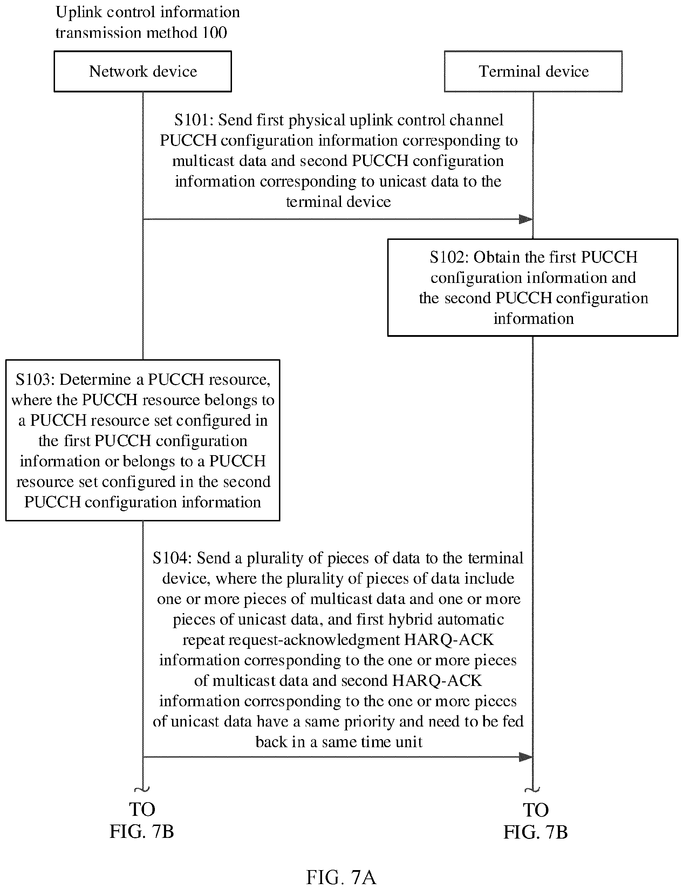

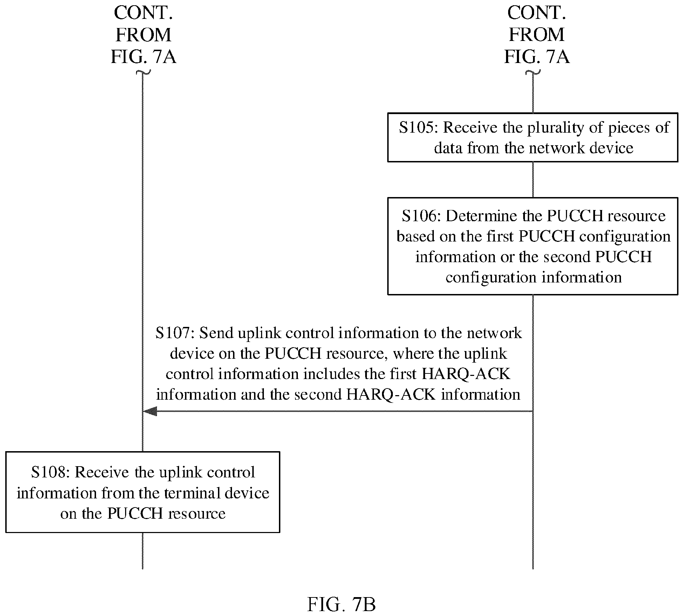

FIG. 7A and FIG. 7B are a schematic flowchart of an uplink control information transmission method 100 according to an embodiment of this application. The uplink control information transmission method 100 is described from a perspective of interaction between a network device and a terminal device. The uplink control information transmission method 100 includes but is not limited to the following steps.

S101: The network device sends first physical uplink control channel PUCCH configuration information corresponding to multicast data and second PUCCH configuration information corresponding to unicast data to the terminal device.

For content of the first PUCCH configuration information and the second PUCCH configuration information, refer to the descriptions of the PUCCH configuration information. Details are not described again.

S102: The terminal device obtains the first PUCCH configuration information and the second PUCCH configuration information.

In an implementation, that the terminal device obtains the first PUCCH configuration information and the second PUCCH configuration information includes: The terminal device receives the first PUCCH configuration information and the second PUCCH configuration information from the network device. In other words, the first PUCCH configuration information and the second PUCCH configuration information are sent by the network device to the terminal device.

After obtaining the first PUCCH configuration information and the second PUCCH configuration information, the terminal device may perform HARQ-ACK feedback on the received multicast data, and may also perform HARQ-ACK feedback on the received unicast data.

S103: The network device determines a PUCCH resource, where the PUCCH resource belongs to a PUCCH resource set configured in the first PUCCH configuration information or belongs to a PUCCH resource set configured in the second PUCCH configuration information.

S104: The network device sends a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The priority of the first HARQ-ACK information corresponding to the one or more pieces of multicast data is configured by the network device for the one or more pieces of multicast data in DCI used to schedule the one or more pieces of multicast data. Therefore, the priority of the first HARQ-ACK information corresponding to the one or more pieces of multicast data is a priority of the one or more pieces of multicast data. Similarly, the priority of the second HARQ-ACK information corresponding to the one or more pieces of unicast data is configured by the network device for the one or more pieces of unicast data in DCI used to schedule the one or more pieces of unicast data. Therefore, the priority of the second HARQ-ACK information corresponding to the one or more pieces of unicast data is a priority of the one or more pieces of unicast data.

Therefore, that the priority of the first HARQ-ACK information is the same as the priority of the second HARQ-ACK information may be understood as that the priority configured by the network device for the one or more pieces of multicast data is the same as the priority configured for the one or more pieces of unicast data.

Feedback time of the first HARQ-ACK information is determined based on a value of k1 in the first PUCCH configuration information, and feedback time of the second HARQ-ACK information is determined based on a value of k1 in the second PUCCH configuration information. Therefore, that the first HARQ-ACK information and the second HARQ-ACK information need to be fed back in the same time unit means that the feedback time of the first HARQ-ACK information that is determined by the terminal device based on the value of k1 in the first PUCCH configuration information and the feedback time of the second HARQ-ACK information that is determined based on the value of k1 in the second PUCCH configuration information are in a same time unit.

S105: The terminal device receives the plurality of pieces of data from the network device.

S106: The terminal device determines the PUCCH resource based on the first PUCCH configuration information or the second PUCCH configuration information.

In an optional implementation, before determining the PUCCH resource based on the first PUCCH configuration information or the second PUCCH configuration information, the terminal device further generates a HARQ-ACK codebook based on the first HARQ-ACK information and the second HARQ-ACK information, to feed back the first HARQ-ACK information corresponding to the one or more pieces of multicast data and the second HARQ-ACK information corresponding to the one or more pieces of unicast data.

When the terminal device is configured as a semi-static HARQ-ACK codebook, the terminal device generates a semi-static HARQ-ACK codebook based on the first HARQ-ACK information and the second HARQ-ACK information. When the terminal device is configured as a dynamic HARQ-ACK codebook, the terminal device generates a dynamic HARQ-ACK codebook based on the first HARQ-ACK information and the second HARQ-ACK information. For an implementation in which the terminal device generates the semi-static HARQ-ACK codebook or the dynamic HARQ-ACK codebook based on the first HARQ-ACK information and the second HARQ-ACK information, refer to the foregoing generation manners of the semi-static HARQ-ACK codebook and the dynamic HARQ-ACK codebook. Details are not described again.

In addition, the terminal device generates the HARQ-ACK codebook based on the first HARQ-ACK information and the second HARQ-ACK information in the following two optional implementations.

In an optional implementation, the terminal device generates a HARQ-ACK codebook #1 based on the first HARQ-ACK information, generates a HARQ-ACK codebook #2 based on the second HARQ-ACK information, and then obtains a HARQ-ACK codebook #3. The HARQ-ACK codebook #3 may be formed by appending the HARQ-ACK codebook #2 to the HARQ-ACK codebook #1, so that the HARQ-ACK codebook #3 is a HARQ-ACK codebook that needs to be fed back by the terminal device to the network device. In this implementation, when receiving the HARQ-ACK codebook #3, the network device can obtain HARQ-ACK information corresponding to the multicast data and the unicast data.

In another optional implementation, the terminal device arranges, based on time domain positions of the unicast data and the multicast data, HARQ-ACK information corresponding to the one or more pieces of unicast data and the one or more pieces of multicast data, to generate a HARQ-ACK codebook #3. In this implementation, the terminal device forms the HARQ-ACK codebook #3 by using a plurality of pieces of HARQ-ACK information based on time domain positions of PDSCHs, thereby helping reduce complexity of the terminal device.

The following describes various optional implementations in which the terminal device determines the PUCCH resource based on the first PUCCH configuration information or the second PUCCH configuration information.

In an optional implementation, that the terminal device determines the PUCCH resource based on the first PUCCH configuration information or the second PUCCH configuration information includes: The terminal device determines the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information.

It may be understood that in this implementation, the terminal device determines a PUCCH resource set from a plurality of PUCCH resource sets in the first PUCCH configuration information based on a size of the generated HARQ-ACK codebook #3, and then determines a PUCCH resource from the determined PUCCH resource set based on a resource indicated by the PRI in the last DCI corresponding to the one or more pieces of multicast data.

In other words, the terminal device determines the PUCCH resource by using the first PUCCH configuration information corresponding to the multicast data and the PRI in the last DCI corresponding to the one or more pieces of multicast data. Therefore, the PUCCH resource belongs to the PUCCH resource set configured in the first PUCCH configuration information.

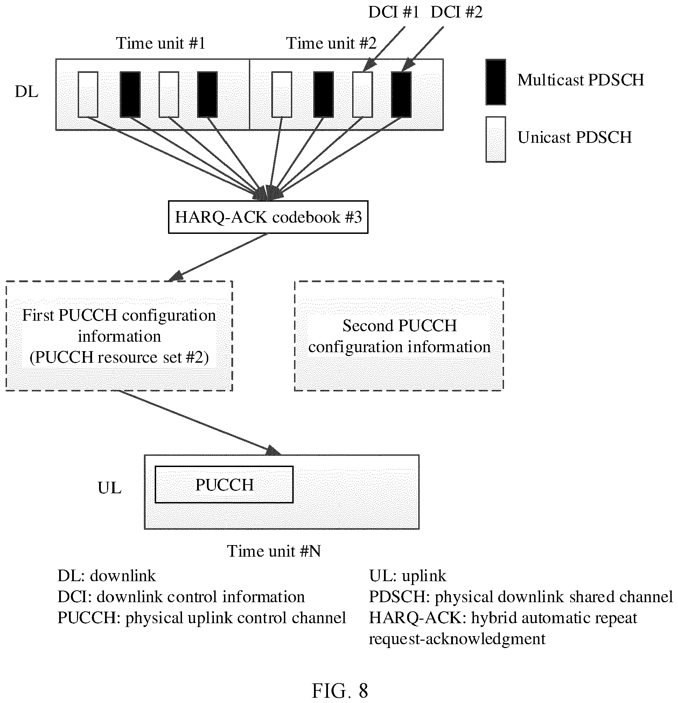

For example, as shown in FIG. 8, the network device schedules a plurality of pieces of multicast data and a plurality of pieces of unicast data for UE in a time unit #1 and a time unit #2, and the UE determines that both first HARQ-ACK information corresponding to the plurality of pieces of multicast data and second HARQ-ACKs corresponding to the plurality of pieces of unicast data need to be fed back in a time unit #N. The terminal device generates a HARQ-ACK codebook #3 by using the first HARQ-ACK information and the second HARQ-ACK information based on time domain positions of the unicast data and the multicast data; then determines, from the plurality of PUCCH resource sets in the first PUCCH configuration information based on a size of the HARQ-ACK codebook #3, that a PUCCH resource set used to feed back the HARQ-ACK information is a PUCCH resource set #2; and then determines, based on a PRI in DCI #2, a PUCCH resource in the PUCCH resource set #2 to send a PUCCH. It can be learned that the PUCCH resource determined by the terminal device belongs to the PUCCH resource set configured in the first PUCCH configuration information.

In another optional implementation, that the terminal device determines the PUCCH resource based on the first PUCCH configuration information or the second PUCCH configuration information includes: The terminal device determines the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information.

It may be understood that in this implementation, the terminal device determines a PUCCH resource set from a plurality of PUCCH resource sets in the second PUCCH configuration information based on a size of the generated HARQ-ACK codebook #3, and then determines a PUCCH resource from the determined PUCCH resource set based on a resource indicated by the PRI in the last DCI corresponding to the one or more pieces of unicast data.

In other words, the terminal device determines the PUCCH resource by using the second PUCCH configuration information corresponding to the unicast data and the PRI in the last DCI corresponding to the one or more pieces of unicast data. Therefore, the determined PUCCH resource belongs to the PUCCH resource set configured in the second PUCCH configuration information.

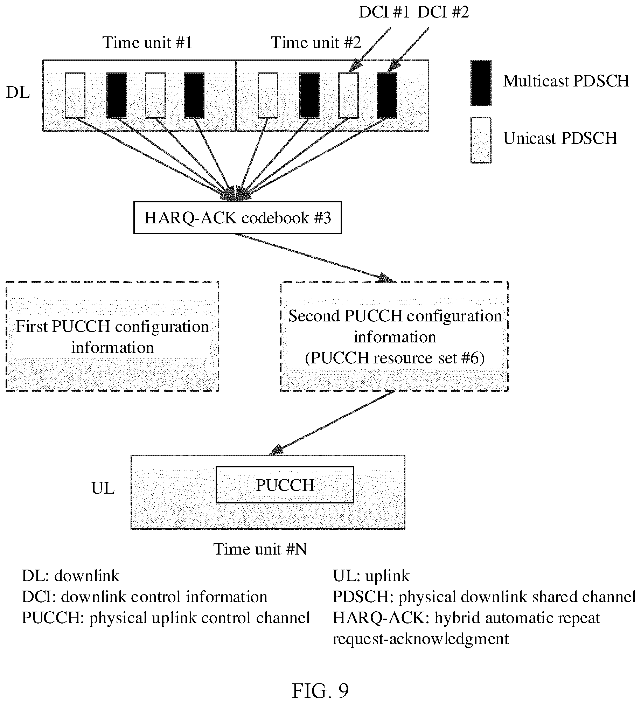

For example, as shown in FIG. 9, the network device schedules a plurality of pieces of multicast data and a plurality of pieces of unicast data for UE in a time unit #1 and a time unit #2, and the UE determines that both first HARQ-ACK information corresponding to the plurality of pieces of multicast data and second HARQ-ACKs corresponding to the plurality of pieces of unicast data need to be fed back in a time unit #N. The terminal device generates a HARQ-ACK codebook #3 by using the first HARQ-ACK information and the second HARQ-ACK information based on time domain positions of the unicast data and the multicast data; then determines, from the plurality of PUCCH resource sets in the second PUCCH configuration information based on a size of the HARQ-ACK codebook #3, that a PUCCH resource set used to feed back the HARQ-ACK information is a PUCCH resource set #3; and then determines, based on a PRI in DCI #1, a PUCCH resource in the PUCCH resource set #3 to send a PUCCH. It can be learned that the PUCCH resource determined by the terminal device belongs to the PUCCH resource set configured in the second PUCCH configuration information.

In another optional implementation, that the terminal device determines the PUCCH resource based on the first PUCCH configuration information or the second PUCCH configuration information includes: The terminal device determines the PUCCH resource based on a physical uplink control channel resource indicator PRI in last downlink control information DCI corresponding to the plurality of pieces of data and PUCCH configuration information corresponding to the last DCI, where the PUCCH resource belongs to a PUCCH resource set configured in the first PUCCH configuration information or belongs to a PUCCH resource set configured in the second PUCCH configuration information.

It may be understood that in this implementation, the terminal device determines, based on a size of the generated HARQ-ACK codebook #3, a PUCCH resource set from a plurality of PUCCH resource sets in the PUCCH configuration information corresponding to the last DCI corresponding to the plurality of pieces of data, and then determines a PUCCH resource from the determined PUCCH resource set based on a resource indicated by the PRI in the last DCI.

The PUCCH configuration information corresponding to the last DCI is PUCCH configuration information corresponding to data scheduled by using the last DCI. When the last DCI is used to schedule the multicast data, the PUCCH configuration information corresponding to the last DCI is the first PUCCH configuration information, and therefore the determined PUCCH resource belongs to the PUCCH resource set configured in the first PUCCH configuration information. When the last DCI is used to schedule the unicast data, the PUCCH configuration information corresponding to the last DCI is the second PUCCH configuration information, and therefore the determined PUCCH resource belongs to the PUCCH resource set configured in the second PUCCH configuration information.

For example, in FIG. 6, the PDSCH #5 scheduled by using the last DCI #5 is multicast data. Therefore, PUCCH configuration information corresponding to the DCI #5 is the first PUCCH configuration information, and a determined PUCCH resource belongs to the PUCCH resource set configured in the first PUCCH configuration information.

In other words, the terminal device determines the PUCCH resource by using the PUCCH configuration information corresponding to the last DCI corresponding to the plurality of pieces of data and the PRI in the DCI, so that the terminal device can flexibly determine, based on DCI corresponding to a last piece of scheduled data, the PUCCH resource for feeding back the HARQ-ACK information.

For example, as shown in FIG. 8, the last DCI corresponding to the plurality of pieces of data is the DCI #2, and a PDSCH scheduled by using the DCI #2 is a multicast PDSCH. Therefore, the terminal device determines the PUCCH resource set #2 in the first PUCCH configuration information based on the size of the HARQ-ACK codebook #3, and then determines, from the determined PUCCH resource set #2 based on the PRI in the DCI #2, that the PUCCH resource is a PUCCH.

In another optional implementation, that the terminal device determines the PUCCH resource based on the first PUCCH configuration information or the second PUCCH configuration information includes: The terminal device receives first indication information from the network device, where the first indication information indicates the terminal device to determine the PUCCH resource based on the first PUCCH configuration information or the second PUCCH configuration information. When the first indication information indicates the terminal device to determine the PUCCH resource based on the first PUCCH configuration information, the terminal device determines the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information. Alternatively, when the first indication information indicates the terminal device to determine the PUCCH resource based on the second PUCCH configuration information, the terminal device determines the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information.

The first indication information may be carried in radio resource control (radio resource control, RRC) signaling. In other words, the terminal device determines, by using the received RRC signaling, whether PUCCH configuration information used when the terminal device determines the PUCCH resource is the first PUCCH configuration information or the second PUCCH configuration information.

For example, if the terminal device determines, by using the RRC signaling, that the first indication information indicates the terminal device to determine the PUCCH resource based on the second PUCCH configuration information, the terminal device determines a PUCCH resource set from a plurality of PUCCH resource sets in the second PUCCH configuration information based on a size of the HARQ-ACK codebook #3, and then determines a PUCCH resource from the determined PUCCH resource set based on the PRI in the last DCI corresponding to the one or more pieces of unicast data.

S107: The terminal device sends uplink control information to the network device on the PUCCH resource, where the uplink control information includes the first HARQ-ACK information and the second HARQ-ACK information.

That the terminal device sends uplink control information to the network device on the PUCCH resource means that the terminal device sends a PUCCH to the network device on the determined PUCCH resource, and the PUCCH carries the first HARQ-ACK information and the second HARQ-ACK information. Alternatively, it may be understood that the PUCCH carries the HARQ-ACK codebook #1 and the HARQ-ACK codebook #2 that are respectively generated based on the first HARQ-ACK information and the second HARQ-ACK information. In other words, the PUCCH carries the HARQ-ACK codebook #3.

Alternatively, that the terminal device sends the uplink control information to the network device on the PUCCH resource may be understood as follows: The terminal device encodes the HARQ-ACK codebook #3, that is, jointly encodes the HARQ-ACK codebook #1 and the HARQ-ACK codebook #2, and then sends the HARQ-ACK codebook #3 on the PUCCH resource.

In other words, the terminal device feeds back, to the network device by sending the uplink control information, the first HARQ-ACK information for the one or more pieces of multicast data and the second HARQ-ACK information for the one or more pieces of unicast data. This helps improve transmission efficiency of the one or more pieces of multicast data and the one or more pieces of unicast data.

S108: The network device receives the uplink control information from the terminal device on the PUCCH resource.

It can be learned that in this embodiment of this application, when the network device configures the first PUCCH configuration information corresponding to the multicast data and the second PUCCH configuration information corresponding to the unicast data for the terminal device, and the first HARQ-ACK information corresponding to the one or more pieces of multicast data and the second HARQ-ACK information corresponding to the one or more pieces of unicast data that are received by the terminal device have the same priority and need to be fed back in the same time unit, the terminal device may feed back, according to a principle that the first HARQ-ACK information and the second HARQ-ACK information have the same priority, the first HARQ-ACK information and the second HARQ-ACK information to the network device on the PUCCH resource determined based on the first PUCCH configuration information or the second PUCCH configuration information, to implement feedback of the one or more pieces of multicast data and the one or more pieces of unicast data, thereby improving data transmission efficiency.

In addition, in this embodiment of this application, the network device may further send a PRI to the terminal device, to indicate, to the terminal device, the PUCCH resource determined by the network device. The following describes several optional implementations in which the network device indicates the PUCCH resource to the terminal device by using the PRI.

In an optional implementation, the network device sends a physical uplink control channel resource indicator PRI in DCI corresponding to a last piece of multicast data, where the PRI indicates the PUCCH resource, and the PUCCH resource is a resource in the PUCCH resource set configured in the first PUCCH configuration information.

In other words, the network device notifies, by using the DCI corresponding to the last piece of multicast data in the one or more pieces of multicast data, the terminal device that the PUCCH resource is a resource in the PUCCH resource set configured in the first PUCCH configuration information, so that when the terminal device determines the PUCCH resource based on the PRI, the determined PUCCH resource is a resource in the PUCCH resource set configured in the first PUCCH configuration information.

In another optional implementation, the network device sends a physical uplink control channel resource indicator PRI in DCI corresponding to a last piece of unicast data, where the PRI indicates the PUCCH resource, and the PUCCH resource is a resource in the PUCCH resource set configured in the second PUCCH configuration information.

In other words, the network device notifies, by using the DCI corresponding to the last piece of unicast data in the one or more pieces of unicast data, the terminal device that the PUCCH resource is a resource in the PUCCH resource set configured in the second PUCCH configuration information, so that when the terminal device determines the PUCCH resource based on the PRI, the determined PUCCH resource is a resource in the PUCCH resource set configured in the second PUCCH configuration information.

In another optional implementation, the network device sends a physical uplink control channel resource indicator PRI in the last downlink control information DCI corresponding to the plurality of pieces of data, where the PRI indicates the PUCCH resource, and the PUCCH resource belongs to the PUCCH resource set configured in the first PUCCH configuration information, or the PUCCH resource belongs to the PUCCH resource set configured in the second PUCCH configuration information.

In other words, the network device notifies, by using the last DCI corresponding to the plurality of pieces of data, the terminal device that the PUCCH resource belongs to the PUCCH resource set configured in the first PUCCH configuration information or the second PUCCH configuration information. When the last DCI corresponding to the plurality of pieces of data is used to schedule the multicast data, the network device notifies the terminal device that the PUCCH resource belongs to the PUCCH resource set configured in the first PUCCH configuration information. When the last DCI corresponding to the plurality of pieces of data is used to schedule the unicast data, the network device notifies the terminal device that the PUCCH resource belongs to the PUCCH resource set configured in the second PUCCH configuration information. Therefore, the terminal device may determine the PUCCH resource from the plurality of PUCCH resource sets in the first PUCCH configuration information or the second PUCCH configuration information based on the PUCCH resource indicated by the PRI.

In another optional implementation, the network device sends the first indication information to the terminal device, where the first indication information indicates that the PUCCH resource belongs to the PUCCH resource set configured by using the first PUCCH configuration information or indicates that the PUCCH resource belongs to the PUCCH resource set configured by using the second PUCCH configuration information. When the first indication information indicates that the PUCCH resource belongs to the PUCCH resource set configured by using the first PUCCH configuration information, the network device sends a physical uplink control channel resource indicator PRI in the last DCI corresponding to the one or more pieces of multicast data, where the PRI indicates the PUCCH resource. Alternatively, when the first indication information indicates that the PUCCH resource belongs to the PUCCH resource set configured by using the second PUCCH configuration information, the network device sends a physical uplink control channel resource indicator PRI in the last DCI corresponding to the one or more pieces of unicast data, where the PRI indicates the PUCCH resource.

In other words, the network device indicates the PUCCH resource to the terminal device by using the first indication information. Then, when the first indication information indicates that the PUCCH resource belongs to the PUCCH resource set configured by using the first PUCCH configuration information, the network device notifies the terminal device of the PUCCH resource by using the last DCI corresponding to the one or more pieces of multicast data; or when the first indication information indicates that the PUCCH resource belongs to the PUCCH resource set configured by using the first PUCCH configuration information, notifies the terminal device of the PUCCH resource by using the last DCI corresponding to the one or more pieces of unicast data. In this way, the terminal device can determine the PUCCH resource based on corresponding PUCCH configuration information and PRI.

It may be understood that numbers of steps S101 to S103 do not limit an execution sequence of these steps, and any logical step falls within the protection scope of this application. For example, step S103 may be performed before step S102, or even before step S101.

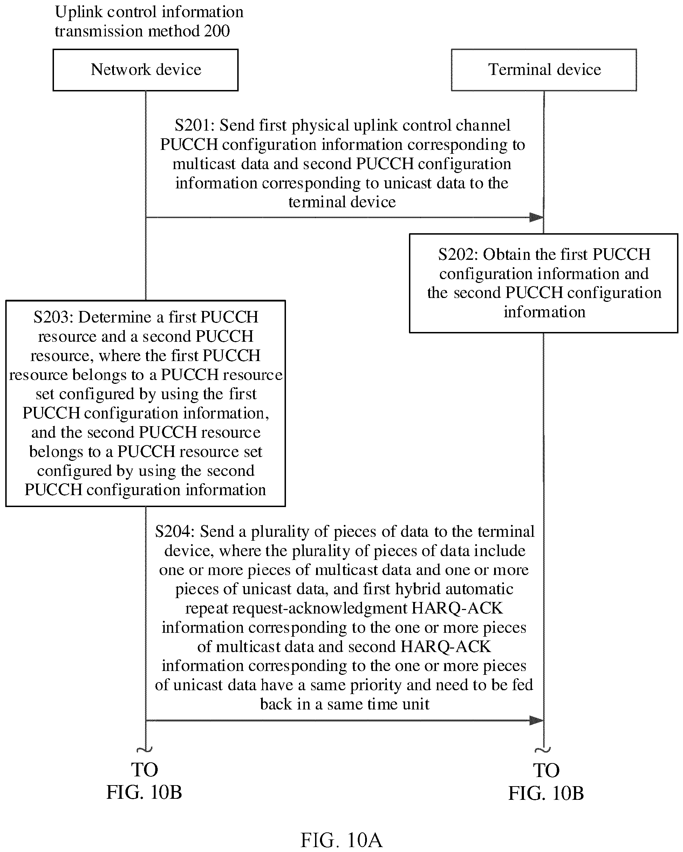

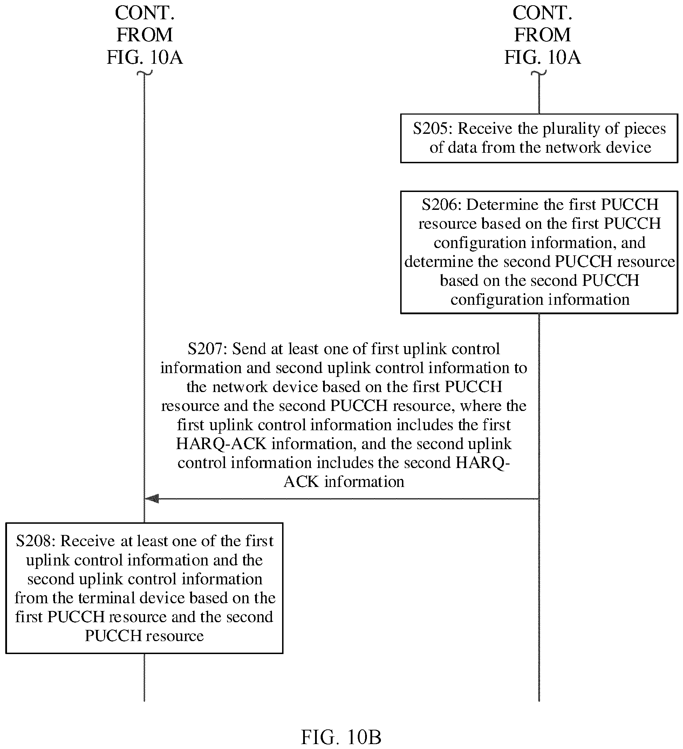

An embodiment of this application further provides an uplink control information transmission method 200. FIG. 10A and FIG. 10B are a schematic flowchart of the uplink control information transmission method 200.

S201: A network device sends first physical uplink control channel PUCCH configuration information corresponding to multicast data and second PUCCH configuration information corresponding to unicast data to a terminal device.

S202: The terminal device obtains the first PUCCH configuration information and the second PUCCH configuration information.

S203: The network device determines a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information.

S204: The network device sends a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

S205: The terminal device receives the plurality of pieces of data from the network device.

For implementations of S201 to S205, refer to the implementations of S101 to S 105. Details are not described again.

S206: The terminal device determines a first PUCCH resource based on the first PUCCH configuration information, and determines a second PUCCH resource based on the second PUCCH configuration information.

In an optional implementation, before the terminal device determines the first PUCCH resource based on the first PUCCH configuration information, and determines the second PUCCH resource based on the second PUCCH configuration information, the terminal device generates a HARQ-ACK codebook #1 based on the first HARQ-ACK information corresponding to the one or more pieces of multicast data, and/or generates a HARQ-ACK codebook #2 based on the second HARQ-ACK information corresponding to the one or more pieces of unicast data. Therefore, the terminal device may feed back the one or more pieces of multicast data by feeding back the HARQ-ACK codebook #1, and feed back the one or more pieces of unicast data by feeding back the HARQ-ACK codebook #2.

Therefore, that the terminal device determines the first PUCCH resource based on the first PUCCH configuration information means that the terminal device determines, based on a size of the HARQ-ACK codebook #1, a PUCCH resource set from a plurality of PUCCH resource sets configured in the first PUCCH configuration information. In other words, the terminal device may determine, based on a size of the first HARQ-ACK information, a PUCCH resource set configured in the first configuration information. Then, the terminal device determines the first PUCCH resource from the determined PUCCH resource set based on a PRI in last DCI corresponding to the one or more pieces of multicast data. It can be learned that the first PUCCH resource determined by the terminal device belongs to the PUCCH resource set in the first PUCCH configuration information.

Similarly, that the terminal device determines the second PUCCH resource based on the second PUCCH configuration information means that the terminal device determines, based on a size of the HARQ-ACK codebook #2, a PUCCH resource set from a plurality of PUCCH resource sets configured in the second PUCCH configuration information. In other words, the terminal device may determine, based on a size of the second HARQ-ACK information, a PUCCH resource set configured in the second configuration information. Then, the terminal device determines the second PUCCH resource from the determined PUCCH resource set based on a PRI in last DCI corresponding to the one or more pieces of unicast data. It can be learned that the second PUCCH resource determined by the terminal device belongs to the PUCCH resource set in the second PUCCH configuration information.

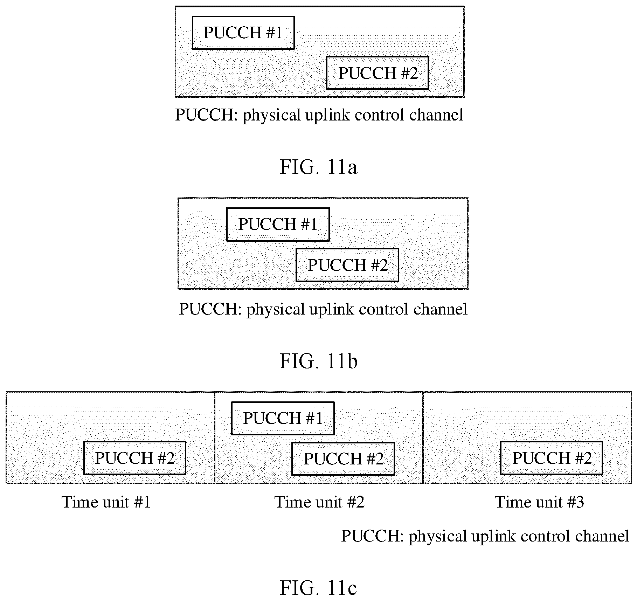

For example, the terminal device may separately generate the HARQ-ACK codebook #1 and the HARQ-ACK codebook #2 based on the first HARQ-ACK information and the second HARQ-ACK information; then determine, based on the size of the HARQ-ACK codebook #1, that the PUCCH resource set is a PUCCH resource set #1 in the plurality of PUCCH resource sets configured in the first PUCCH configuration information, and determine, based on the size of the HARQ-ACK codebook #2, that the PUCCH resource set is a PUCCH resource set #3 in the plurality of PUCCH resource sets configured in the second PUCCH configuration information; and then determine, based on the PRI corresponding to the one or more pieces of multicast data, that the first PUCCH resource in the PUCCH resource set #1 is a PUCCH #1 shown in FIG. 11a, and determine, based on the PRI corresponding to the one or more pieces of unicast data, that the second PUCCH resource in the PUCCH resource set #3 is a PUCCH #2 shown in FIG. 11a.

S207: The terminal device sends at least one of first uplink control information and second uplink control information to the network device based on the first PUCCH resource and the second PUCCH resource, where the first uplink control information includes the first HARQ-ACK information, and the second uplink control information includes the second HARQ-ACK information.

In other words, based on the first PUCCH resource and the second PUCCH resource, the terminal device may feed back the first HARQ-ACK information and the second HARQ-ACK information to the network device, or feed back one of the first HARQ-ACK information and the second HARQ-ACK information to the network device.

When the terminal device sends the first uplink control information to the network device on the first PUCCH resource, the terminal device independently encodes the HARQ-ACK codebook #1, and then sends the HARQ-ACK codebook #1 to the network device on the first PUCCH resource. When the network device sends the second uplink control information to the network device on the second PUCCH resource, the terminal device independently encodes the HARQ-ACK codebook #2, and then sends the HARQ-ACK codebook #2 to the network device on the second PUCCH resource.

The following specifically describes several optional implementations in which the terminal device sends at least one of the first uplink control information and the second uplink control information to the network device based on the first PUCCH resource and the second PUCCH resource.

In an optional implementation, when the first PUCCH resource and the second PUCCH resource do not overlap in time domain, the terminal device sends the first uplink control information to the network device on the first PUCCH resource, and sends the second uplink control information to the network device on the second PUCCH resource. That the first PUCCH resource and the second PUCCH resource do not overlap in time domain means that the first PUCCH resource and the second PUCCH resource occupy completely different symbols in a same time unit.

For example, the first PUCCH resource and the second PUCCH resource that are determined by the terminal device are shown in FIG. 11a. The first PUCCH resource is the PUCCH #1, and the second PUCCH resource is the PUCCH #2. It can be learned from FIG. 11a that the PUCCH #1 and the PUCCH #2 do not overlap in time domain. Therefore, the terminal device sends the first uplink control information on the PUCCH #1, to feed back the first HARQ-ACK information, and sends the second uplink control information on the PUCCH #2, to feed back the second HARQ-ACK information.

It can be learned that in this implementation, when the first PUCCH resource and the second PUCCH resource do not overlap in time domain, the terminal device feeds back the first HARQ-ACK information and the second HARQ-ACK information on the first PUCCH resource and the second PUCCH resource respectively.

In another optional implementation, when the first PUCCH resource and the second PUCCH resource overlap in time domain, the terminal device sends the first uplink control information to the network device on the first PUCCH resource, or sends the second uplink control information to the network device on the second PUCCH resource. When the first PUCCH resource and the second PUCCH resource overlap in time domain, the first PUCCH resource and the second PUCCH resource have a same symbol in a same slot. For example, in the same slot, the first PUCCH resource occupies symbols 4 to 8, and the second PUCCH resource occupies symbols 6 to 10. In this case, both the first PUCCH resource and the second PUCCH resource occupy symbols 6, 7, and 8. In other words, the first PUCCH resource and the second PUCCH resource have same symbols 6, 7, and 8.

In other words, when the first PUCCH resource and the second PUCCH resource overlap in time domain, the terminal device feeds back one of the first HARQ-ACK information and the second HARQ-ACK information to the network device, to ensure that the HARQ-ACK information is correctly fed back.

Further, in an optional implementation, when the first PUCCH resource and the second PUCCH resource overlap in time domain, when a quantity of bits of the first uplink control information is greater than a quantity of bits of the second uplink control information, the terminal device sends the first uplink control information on the first PUCCH resource; or when a quantity of bits of the second uplink control information is greater than or equal to a quantity of bits of the first uplink control information, the terminal device sends the second uplink control information on the second PUCCH resource.

In other words, when the first PUCCH resource and the second PUCCH resource overlap in time domain, the terminal device sends, to the network device, uplink control information with a larger quantity of bits in the first uplink control information and the second uplink control information, to ensure that a HARQ-ACK information amount with a larger HARQ-ACK information amount is correctly fed back. This helps improve transmission efficiency of data with a large data amount.

It may be understood that when the first uplink control information and the second uplink control information have a same quantity of bits, it may be agreed to send the first uplink control information, or it may be agreed to send the second uplink control information. This is not limited in this application.

For example, as shown in FIG. 11b, the first PUCCH resource is a PUCCH #1, and the second PUCCH resource is a PUCCH #2. It can be learned from FIG. 11b that the PUCCH #1 and the PUCCH #2 overlap in time domain. If the quantity of bits of the first uplink control information is 16 bits, and the quantity of bits of the second uplink control information is 7 bits, the terminal device sends the first uplink control information on the PUCCH #1, to feed back the first HARQ-ACK information.

In another optional implementation, when the first PUCCH resource and the second PUCCH resource overlap in time domain, when a quantity of bits of the first uplink control information is less than a quantity of bits of the second uplink control information, the terminal device sends the first uplink control information on the first PUCCH resource; or when a quantity of bits of the second uplink control information is less than or equal to a quantity of bits of the first uplink control information, the terminal device sends the second uplink control information on the second PUCCH resource.

In other words, when the first PUCCH resource and the second PUCCH resource overlap in time domain, the terminal device sends, to the network device, uplink control information with a smaller quantity of bits in the first uplink control information and the second uplink control information, to ensure that HARQ-ACK information with smaller HARQ-ACK information is correctly fed back. This helps improve transmission efficiency of data with a small data amount, reduce PUCCH overheads occupied by the HARQ-ACK information, and reduce interference to another terminal device.

For example, the first PUCCH resource and the second PUCCH resource are shown in FIG. 11b. If the quantity of bits of the first uplink control information is 9 bits, and the quantity of bits of the second uplink control information is 6 bits, the terminal device sends the second uplink control information on the PUCCH #2, to feed back the second HARQ-ACK information.

In another optional implementation, when the first PUCCH resource and the second PUCCH resource overlap in time domain, when a time domain position of the first PUCCH resource is before a time domain position of the second PUCCH resource, the terminal device sends the first uplink control information on the first PUCCH resource; or when a time domain position of the second PUCCH resource is before a time domain position of the first PUCCH resource, the terminal device sends the second uplink control information on the second PUCCH resource. That the time domain position of the first PUCCH resource is before the time domain position of the second PUCCH resource means that a time domain start position (or a time domain end position) of the first PUCCH resource is before a time domain start position (or a time domain end position) of the second PUCCH resource. Similarly, that the time domain position of the second PUCCH resource is before the time domain position of the first PUCCH resource means that a time domain start position (or a time domain end position) of the second PUCCH resource is before a time domain start position (or a time domain end position) of the first PUCCH resource.

In other words, when the first PUCCH resource and the second PUCCH resource overlap in time domain, the terminal device feeds back corresponding HARQ-ACK information on a PUCCH resource whose time domain position is near a front, to ensure that the HARQ-ACK information carried on the PUCCH resource whose time domain resource position is near the front is correctly fed back.

For example, the first PUCCH resource and the second PUCCH resource are shown in FIG. 11b. It can be learned from FIG. 11b that a time domain position of the PUCCH #1 is before a time domain position of the PUCCH #2. Therefore, the terminal device sends the first uplink control information to the network device on the PUCCH #1, to feed back the first HARQ-ACK information.

In another optional implementation, when the first PUCCH resource and the second PUCCH resource overlap in time domain, when the first PUCCH resource is configured to be repeatedly sent, the terminal device sends the second uplink control information on the second PUCCH resource; or when the second PUCCH resource is configured to be repeatedly sent, the terminal device sends the first uplink control information on the first PUCCH resource.

That the first PUCCH resource is configured to be repeatedly sent means that the first PUCCH resource is not only configured to be sent in a time unit in which the first PUCCH resource is located, but also configured to be sent at a same time domain position (that is, occupied symbol positions in slots are the same) in another time unit. It may alternatively be understood that, that the first PUCCH resource is configured to be repeatedly sent means that "nrofSlots" is configured for the first PUCCH resource. This indicates that a PUCCH carrying the first HARQ-ACK information is sent at a position of the first PUCCH resource in one or more slots represented by the nrofSlots. In other words, the first uplink control information is sent at the position of the first PUCCH resource.

Similarly, that the second PUCCH resource is configured to be repeatedly sent means that the second PUCCH resource is not only configured to be sent in a time unit in which the second PUCCH resource is located, but also configured to be sent at a same time domain position in another time unit. It may alternatively be understood that, that the second PUCCH resource is configured to be repeatedly sent means that "nrofSlots" is configured for the second PUCCH resource. This indicates that a PUCCH carrying the second HARQ-ACK information is sent at a position of the second PUCCH resource in a slot represented by the nrofSlots. In other words, the second uplink control information is sent at the position of the second PUCCH resource.

Because a PUCCH resource configured to be repeatedly sent may be further sent at a same time domain position in another time unit, when a PUCCH resource determined by the terminal device is configured to be repeatedly sent, the terminal device may discard the PUCCH resource. However, a PUCCH resource that is not configured to be repeatedly sent can be sent only in a time unit in which the PUCCH resource is located. Therefore, the terminal device sends uplink control information on the PUCCH resource that is not configured to be repeatedly sent, to ensure that HARQ-ACK information carried on the PUCCH resource that is not configured to be repeatedly sent can be correctly fed back.

For example, as shown in FIG. 11c, the first PUCCH resource is a PUCCH #1, and the second PUCCH resource is a PUCCH #2. It can be learned from FIG. 11c that, in addition to being configured to be sent in a time unit #1, the PUCCH #2 may be further sent at same time domain positions in a time unit #2 and a time unit #3 as that in the time unit #1. Therefore, to ensure that HARQ-ACK information carried on the PUCCH #1 is fed back, the terminal device sends the first uplink control information on the PUCCH #1.

S208: The network device receives at least one of the first uplink control information and the second uplink control information from the terminal device based on the first PUCCH resource and the second PUCCH resource.

An implementation in which the network device receives at least one of the first uplink control information and the second uplink control information from the terminal device based on the first PUCCH resource and the second PUCCH resource corresponds to an implementation in which the terminal device sends at least one of the first uplink control information and the second uplink control information to the network device based on the first PUCCH resource and the second PUCCH resource in S206. The following describes several corresponding implementations in which the network device receives at least one of the first uplink control information and the second uplink control information from the terminal device based on the first PUCCH resource and the second PUCCH resource.

In an optional implementation, that the network device receives at least one of the first uplink control information and the second uplink control information from the terminal device based on the first PUCCH resource and the second PUCCH resource includes: When the first PUCCH resource and the second PUCCH resource do not overlap, the network device receives the first uplink control information from the terminal device on the first PUCCH resource, and receives the second uplink control information from the terminal device on the second PUCCH resource. It can be learned that when the first PUCCH resource and the second PUCCH resource do not overlap, the network device receives the first uplink control information and the second uplink control information that are sent by the terminal device.

In another optional implementation, that the network device receives at least one of the first uplink control information and the second uplink control information from the terminal device based on the first PUCCH resource and the second PUCCH resource includes: When the first PUCCH resource and the second PUCCH resource overlap, the network device receives the first uplink control information from the terminal device on the first PUCCH resource, or receives the second uplink control information from the terminal device on the second PUCCH resource. It can be learned that when the first PUCCH resource and the second PUCCH resource overlap, the network device receives the first uplink control information or the second uplink control information sent by the terminal device.

In an optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a quantity of bits of the first uplink control information is greater than a quantity of bits of the second uplink control information; or the network device receives the second uplink control information from the terminal device on the second PUCCH resource, where a quantity of bits of the second uplink control information is greater than or equal to a quantity of bits of the first uplink control information.

It can be learned that when the first PUCCH resource and the second PUCCH resource overlap, the network device receives uplink control information that is in the first uplink control information and the second uplink control information sent by the terminal device and that has a larger quantity of bits.

In another optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a quantity of bits of the first uplink control information is less than a quantity of bits of the second uplink control information; or the network device receives the second uplink control information from the terminal device on the second PUCCH resource, where a quantity of bits of the second uplink control information is less than or equal to a quantity of bits of the first uplink control information.

It can be learned that when the first PUCCH resource and the second PUCCH resource overlap, the network device receives uplink control information that is in the first uplink control information and the second uplink control information sent by the terminal device and that has a smaller quantity of bits.

In another optional implementation, that the network device receives the first uplink control information from the terminal device on the first PUCCH resource, or receives the second uplink control information from the terminal device on the second PUCCH resource includes: The network device receives the first uplink control information from the terminal device on the first PUCCH resource, where a time domain position of the first PUCCH resource is before a time domain position of the second PUCCH resource; or the network device receives the second uplink control information on the second PUCCH resource, where a time domain position of the second PUCCH resource is before a time domain position of the first PUCCH resource.

It can be learned that when the first PUCCH resource and the second PUCCH resource overlap, the network device receives HARQ-ACK information that is fed back by the terminal device and that is carried on a PUCCH resource whose time domain position is near a front.

In another optional implementation, that the network device receives the first uplink control information from the terminal device on the first PUCCH resource, or receives the second uplink control information from the terminal device on the second PUCCH resource includes: The network device receives the second uplink control information from the terminal device on the second PUCCH resource, where the first PUCCH resource is configured to be repeatedly sent; or the network device receives the first uplink control information on the first PUCCH resource, where the second PUCCH resource is configured to be repeatedly sent.

It can be learned that when the first PUCCH resource and the second PUCCH resource overlap, the network device receives HARQ-ACK information that is fed back by the terminal device and that is carried on a PUCCH resource not configured to be repeatedly sent.

It can be learned that in this embodiment of this application, when the network device configures the first PUCCH configuration information corresponding to the multicast data and the second PUCCH configuration information corresponding to the unicast data for the terminal device, and the first HARQ-ACK information corresponding to the one or more pieces of multicast data and the second HARQ-ACK information corresponding to the one or more pieces of unicast data that are received by the terminal device have the same priority and need to be fed back in the same time unit, the terminal device may send at least one of the first uplink control information and the second uplink control information to the network device based on the first PUCCH configuration information or the second PUCCH configuration information, to ensure that at least one of the first HARQ-ACK information and the second HARQ-ACK information is fed back, thereby improving data transmission efficiency.

It may be understood that numbers of steps S201 to S203 do not limit an execution sequence of these steps, and any logical step falls within the protection scope of this application. For example, step S203 may be performed before step S202, or even before step S201.

In this embodiment of this application, when the terminal device obtains the first PUCCH configuration information corresponding to the multicast data and the second PUCCH configuration information corresponding to the unicast data, and the first HARQ-ACK information corresponding to the one or more pieces of received multicast data and the second HARQ-ACK information corresponding to the received unicast data have the same priority and need to be fed back in the same time unit, whether the HARQ-ACK feedback manner in the uplink control information transmission method 100 or the HARQ-ACK feedback manner in the uplink control information transmission method 200 is used to feed back the first HARQ-ACK information and the second HARQ-ACK information is indicated by the network device to the terminal device, so that the terminal device and the network device consistently understand the HARQ-ACK feedback manner, thereby improving HARQ-ACK information transmission efficiency. Optionally, the network device may indicate, to the terminal device by using RRC signaling, a manner of feeding back the HARQ-ACK information in this scenario.

In other words, if the network device indicates the terminal device to generate one HARQ-ACK codebook by using the first HARQ-ACK information and the second HARQ-ACK information, the terminal device feeds back, in the manner in the uplink control information transmission method 100, the first HARQ-ACK information and the second HARQ-ACK information on the PUCCH resource determined based on the first PUCCH configuration information or the second PUCCH configuration information. If the network device indicates the terminal device to separately generate HARQ-ACK codebooks corresponding to the first HARQ-ACK information and the second HARQ-ACK information, the terminal device feeds back, in the manner in the uplink control information transmission method 200, at least one of the first HARQ-ACK information and the second HARQ-ACK information on the first PUCCH resource determined based on the first PUCCH configuration information and the second PUCCH resource determined based on the second PUCCH configuration information.

In an implementation, when the network device configures, for the terminal device, the second PUCCH configuration information corresponding to the unicast data, but does not configure the first PUCCH configuration information corresponding to the multicast data, and schedules the one or more pieces of multicast data and the one or more pieces of unicast data for the terminal device, and the first HARQ-ACK information corresponding to the one or more pieces of multicast data and the second HARQ-ACK information corresponding to the one or more pieces of unicast data have the same priority and need to be fed back in the same time unit, the terminal device forms a HARQ-ACK codebook #4 by using the first HARQ-ACK information and the second HARQ-ACK information, then determines a PUCCH resource set from the plurality of PUCCH resource sets in the second PUCCH configuration information based on a size of the HARQ-ACK codebook #4, then determines a third PUCCH resource from the determined PUCCH resource set based on a PRI indication in last DCI corresponding to the one or more pieces of multicast data and the one or more pieces of unicast data, and finally feeds back the HARQ-ACK codebook #4 to the network device on the third PUCCH resource, to implement feedback of the first HARQ-ACK information and the second HARQ-ACK information. When the network device configures a semi-static codebook mode for the terminal device, the terminal device forms the HARQ-ACK codebook #4 by using the first HARQ-ACK information and the second HARQ-ACK information in the foregoing semi-static codebook generation manner. When the network device configures a dynamic codebook mode for the terminal device, the terminal device separately generates the HARQ-ACK codebook #1 and the HARQ-ACK codebook #2 by using the first HARQ-ACK information and the second HARQ-ACK information in the foregoing dynamic codebook generation manner, and then concatenates the codebook #1 and the codebook #2 to form the codebook #4. It may be understood that the PRI in the last DCI corresponding to the one or more pieces of multicast data and the one or more pieces of unicast data may be replaced with a PRI in last unicast DCI, or may be replaced with a PRI in other DCI for scheduling the unicast data, for example, a PRI in first DCI for scheduling the one or more pieces of unicast data, or a PRI in DCI for scheduling a first piece of unicast data in the one or more pieces of unicast data, or a PRI in DCI for scheduling a last piece of unicast data in the one or more pieces of unicast data, or a PRI in other DCI. Similarly, the last DCI corresponding to the one or more pieces of multicast data and the one or more pieces of unicast data may be replaced with a PRI in multicast DCI, or may be replaced with a PRI in other DCI for scheduling the multicast data, for example, a PRI in first DCI for scheduling the one or more pieces of multicast data, a PRI in DCI for scheduling a first piece of multicast data in the one or more pieces of multicast data, or a PRI in DCI for scheduling a last piece of multicast data in the one or more pieces of multicast data, or a PRI in other DCI. It may be understood that the PRI in the DCI may alternatively be replaced with another indication field to indicate the PUCCH resource. This is not limited in this embodiment of this application.

In another implementation, when the network device configures the first PUCCH configuration information corresponding to the multicast data and the second PUCCH configuration information corresponding to the unicast data for the terminal device, and schedules the one or more pieces of multicast data and the one or more pieces of unicast data for the terminal device, and the first HARQ-ACK information corresponding to the one or more pieces of multicast data and the second HARQ-ACK information corresponding to the one or more pieces of unicast data have the same priority and need to be fed back in the same time unit, the terminal device feeds back the first HARQ-ACK information and the second HARQ-ACK information to the network device in the implementation in the uplink control information transmission method 200. Details are not described again.

In an optional implementation, when there is one piece of first PUCCH configuration information, a priority corresponding to the first PUCCH configuration information is a high priority. The priority corresponding to the first PUCCH configuration information may be understood as a priority corresponding to the multicast data corresponding to the first PUCCH configuration information, or may be understood as a priority of the HARQ-ACK information corresponding to the first PUCCH configuration information. For example, when the network device schedules the multicast data, if a priority of the multicast data is configured as a high priority in DCI for scheduling the multicast data, the priority corresponding to the first PUCCH configuration information is the high priority.

In other words, when the network device configures one piece of first PUCCH configuration information for the multicast data, the priority configured by the network device for the multicast data is a high priority instead of a default low priority.

In another optional implementation, when there are two pieces of first PUCCH configuration information, a priority corresponding to one piece of PUCCH configuration information in the two pieces of PUCCH configuration information is a high priority, and a priority corresponding to the other piece of PUCCH configuration information is a low priority. In other words, when the network device configures two pieces of PUCCH configuration information corresponding to the multicast data for the terminal device, priorities corresponding to the two pieces of PUCCH configuration information are different.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling. In other words, the priority corresponding to the first PUCCH configuration information is a physical layer priority configured by the network device for the terminal device, and is a priority of feeding back, by the terminal device, HARQ-ACK information of a PDSCH at a physical layer. In addition, the priority of the HARQ-ACK information may alternatively be understood as a priority of a PUCCH that carries the HARQ-ACK information.

In another optional implementation, when the priority of the first PUCCH configuration information is configured in a bit in DCI corresponding to the one or more pieces of multicast data, and a DCI format is 1_1 or 1_2, a priority indicator (priority indicator) in the DCI indicates 0 or 1. When the priority indicator indicates "0", it indicates that a priority of downlink data to be scheduled by using the DCI is a low priority. In other words, the priority corresponding to the first PUCCH configuration information is a low priority. When the priority indicator indicates "1", it indicates that a priority of downlink data to be scheduled by using the DCI is a high priority. In other words, the priority corresponding to the first PUCCH configuration information is a high priority.

In another implementation, when the priority of the first PUCCH configuration information is configured in a bit in DCI corresponding to the one or more pieces of multicast data, and a DCI format is 1_0, there is no priority indicator field. In this case, a priority of downlink data scheduled by using the DCI may be considered as a low priority by default. In other words, the priority corresponding to the first PUCCH configuration information is a low priority.

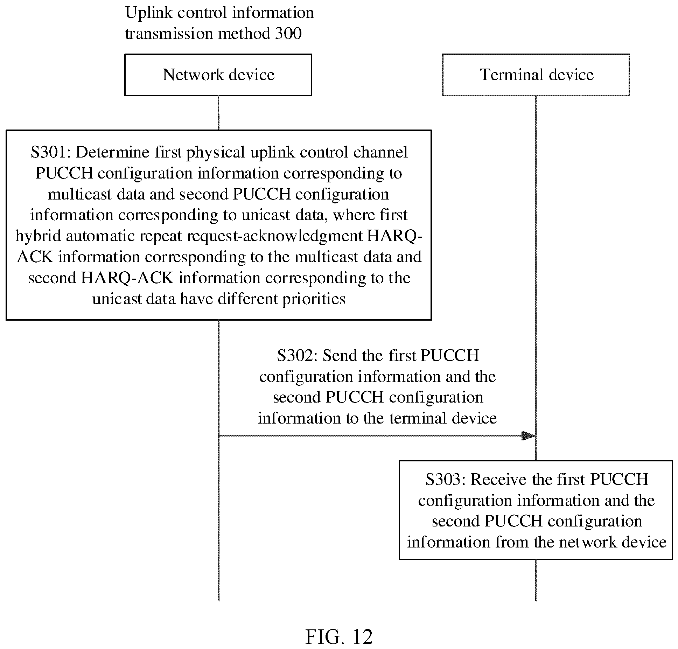

When the one or more pieces of multicast data and the one or more pieces of unicast data are scheduled for the terminal device, to enable the terminal device to feed back, in a current manner of feeding back feedback information corresponding to the unicast data, feedback information corresponding to the one or more pieces of multicast data and the one or more pieces of unicast data, the terminal device does not expect that the first PUCCH configuration information corresponding to the received multicast data and the second PUCCH configuration information corresponding to the received unicast data correspond to a same priority. Therefore, an embodiment of this application further provides an uplink control information transmission method 300. FIG. 12 is a schematic flowchart of the uplink control information transmission method 300. The uplink control information transmission method 300 is also described from a perspective of interaction between a network device and a terminal device. The uplink control information transmission method 300 includes but is not limited to the following steps.

S301: The network device determines first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities.

That the first HARQ-ACK information and the second HARQ-ACK information have different priorities may be understood as that a priority of the first PUCCH configuration information is different from a priority of the second PUCCH configuration information. In this implementation, when one or more pieces of multicast data and one or more pieces of unicast data are scheduled for the terminal device, the terminal device may separately feed back the first HARQ-ACK information and the second HARQ-ACK information according to a principle of different priorities of HARQ-ACK information. For a specific feedback manner, refer to the foregoing manner in which the terminal device feeds back HARQ-ACK information of different priorities. Details are not described again.

S302: The network device sends the first PUCCH configuration information and the second PUCCH configuration information to the terminal device.

S303: The terminal device receives the first PUCCH configuration information and the second PUCCH configuration information from the network device.

It can be learned that in this embodiment of this application, when the one or more pieces of multicast data and the one or more pieces of unicast data are scheduled for the terminal device, the first HARQ-ACK information corresponding to the received multicast data and the second HARQ-ACK information corresponding to the received unicast data correspond to different priorities. Therefore, the terminal device may separately feed back the first HARQ-ACK information and the second HARQ-ACK information based on the principle of different priorities of HARQ-ACK information. The feedback manner is consistent with a feedback manner currently understood by the network device, so that data transmission efficiency can be improved, and processing complexity of the network device and the terminal device can be reduced.

To implement functions in the methods provided in embodiments of this application, the terminal device or the network device may include a hardware structure and/or a software module, and implement the functions in a form of the hardware structure, the software module, or a combination of the hardware structure and the software module. Whether a function in the functions is performed by using the hardware structure, the software module, or the combination of the hardware structure and the software module depends on particular applications and design constraints of the technical solutions.

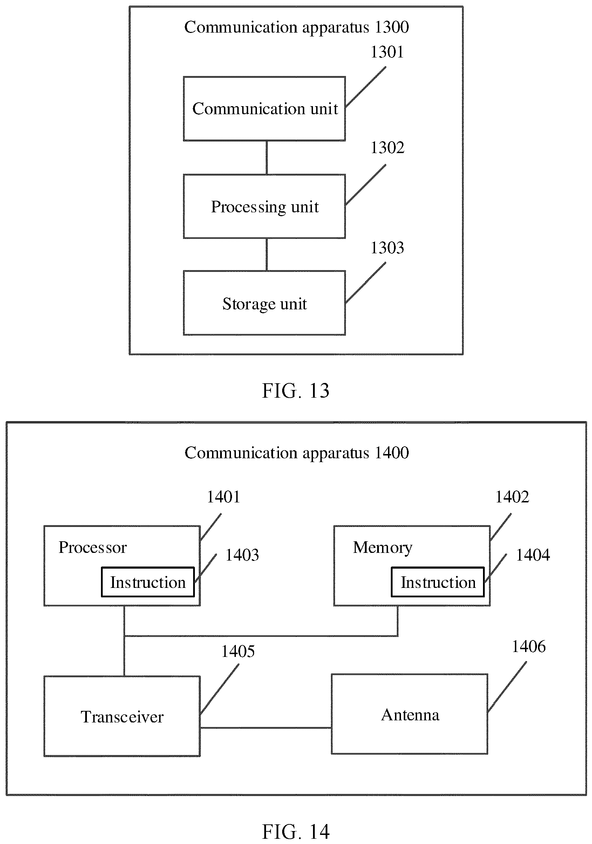

As shown in FIG. 13, an embodiment of this application provides a communication apparatus 1300. The communication apparatus 1300 may be a component (for example, an integrated circuit or a chip) of a terminal device, or may be a component (for example, an integrated circuit or a chip) of a network device. Alternatively, the communication apparatus 1300 may be another communication unit, configured to implement the method in the method embodiments of this application. The communication apparatus 1300 may include a communication unit 1301 and a processing unit 1302. Optionally, the processing unit 1302 and a storage unit 1303 may be further included.

In a possible design, one or more units in FIG. 13 may be implemented by one or more processors, may be implemented by one or more processors and memories, may be implemented by one or more processors and transceivers, or may be implemented by one or more processors, memories, and transceivers. This is not limited in this embodiment of this application. The processor, the memory, and the transceiver may be disposed separately, or may be integrated.

The communication apparatus 1300 has a function of implementing the terminal device described in embodiments of this application. Optionally, the communication apparatus 1300 has a function of implementing the network device described in embodiments of this application. For example, the communication apparatus 1300 includes a module or a unit or a means (means) corresponding to performing the steps of the terminal device in embodiments of this application by the terminal device. The function or the unit or the means (means) may be implemented by software, or may be implemented by hardware, or may be implemented by hardware executing corresponding software, or may be implemented in a combination of software and hardware. For details, refer to the corresponding descriptions in the corresponding method embodiments.

In a possible design, the communication apparatus 1300 may include:
a processing unit 1302, configured to obtain first physical uplink control channel PUCCH configuration information corresponding to multicast data and second PUCCH configuration information corresponding to unicast data, where it may be understood that the processing unit 1302 may obtain the first PUCCH configuration information and the second PUCCH configuration information from a network device by using a communication unit 1301.

The communication unit 1301 is further configured to receive a plurality of pieces of data from the network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processing unit 1302 is further configured to determine a PUCCH resource based on the first PUCCH configuration information or the second PUCCH configuration information.

The communication unit 1301 is further configured to send uplink control information to the network device on the PUCCH resource, where the uplink control information includes the first HARQ-ACK information and the second HARQ-ACK information.

In an optional implementation, when determining the PUCCH resource based on the first PUCCH configuration information or the second PUCCH configuration information, the processing unit 1302 is specifically configured to: determine the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information; or determine the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information.

In another optional implementation, when determining the PUCCH resource based on the first PUCCH configuration information or the second PUCCH configuration information, the processing unit 1302 is specifically configured to: determine the PUCCH resource based on a physical uplink control channel resource indicator PRI in last downlink control information DCI corresponding to the plurality of pieces of data and PUCCH configuration information corresponding to the last DCI, where the PUCCH resource belongs to a PUCCH resource set configured in the first PUCCH configuration information or belongs to a PUCCH resource set configured in the second PUCCH configuration information.

In another optional implementation, when determining the PUCCH resource based on the first PUCCH configuration information or the second PUCCH configuration information, the processing unit 1302 is specifically configured to: receive first indication information from the network device, where the first indication information indicates the terminal device to determine the PUCCH resource based on the first PUCCH configuration information or the second PUCCH configuration information; and when the first indication information indicates the terminal device to determine the PUCCH resource based on the first PUCCH configuration information, determine the PUCCH resource based on the first PUCCH configuration information and a physical uplink control channel resource indicator PRI in last downlink control information DCI corresponding to the one or more pieces of multicast data, where the PUCCH resource belongs to a PUCCH resource set configured in the first PUCCH configuration information; or when the first indication information indicates the terminal device to determine the PUCCH resource based on the second PUCCH configuration information, determine the PUCCH resource based on the second PUCCH configuration information and a physical uplink control channel resource indicator PRI in last downlink control information DCI corresponding to the one or more pieces of unicast data, where the PUCCH resource belongs to a PUCCH resource set configured in the second PUCCH configuration information.

In an optional implementation, when there is one piece of first PUCCH configuration information, a priority corresponding to the first PUCCH configuration information is a high priority.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

This embodiment of this application is based on a same concept as the method embodiment shown in the uplink control information transmission method 100, and brings same technical effect. For a specific principle, refer to the descriptions of embodiments shown in the uplink control information transmission method 100. Details are not described again.

In another possible design, the communication apparatus 1300 may include:
a processing unit 1302, configured to obtain first physical uplink control channel PUCCH configuration information corresponding to multicast data and second PUCCH configuration information corresponding to unicast data, where it may be understood that the processing unit 1302 may obtain the first PUCCH configuration information and the second PUCCH configuration information from a network device by using a communication unit 1301.

The communication unit 1301 is further configured to receive a plurality of pieces of data from the network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processing unit 1302 is further configured to: determine a first PUCCH resource based on the first PUCCH configuration information, and determine a second PUCCH resource based on the second PUCCH configuration information.

The communication unit 1301 is further configured to send at least one of first uplink control information and second uplink control information to the network device based on the first PUCCH resource and the second PUCCH resource, where the first uplink control information includes the first HARQ-ACK information, and the second uplink control information includes the second HARQ-ACK information.

In an optional implementation, when sending at least one of the first uplink control information and the second uplink control information to the network device based on the first PUCCH resource and the second PUCCH, the communication unit 1301 is specifically configured to: when the first PUCCH resource and the second PUCCH resource do not overlap in time domain, send the first uplink control information to the network device on the first PUCCH resource, and send the second uplink control information to the network device on the second PUCCH resource.

In another optional implementation, when sending at least one of the first uplink control information and the second uplink control information to the network device based on the first PUCCH resource and the second PUCCH, the communication unit 1301 is specifically configured to: when the first PUCCH resource and the second PUCCH resource overlap in time domain, send the first uplink control information to the network device on the first PUCCH resource, or send the second uplink control information to the network device on the second PUCCH resource.

In another optional implementation, when sending the first uplink control information to the network device on the first PUCCH resource, or sending the second uplink control information to the network device on the second PUCCH resource, the communication unit 1301 is specifically configured to: when a quantity of bits of the first uplink control information is greater than a quantity of bits of the second uplink control information, send the first uplink control information on the first PUCCH resource; or when a quantity of bits of the second uplink control information is greater than or equal to a quantity of bits of the first uplink control information, send the second uplink control information on the second PUCCH resource.

In another optional implementation, when sending the first uplink control information to the network device on the first PUCCH resource, or sending the second uplink control information to the network device on the second PUCCH resource, the communication unit 1301 is configured to: when a quantity of bits of the first uplink control information is less than a quantity of bits of the second uplink control information, send the first uplink control information on the first PUCCH resource; or when a quantity of bits of the second uplink control information is less than or equal to a quantity of bits of the first uplink control information, the terminal device sends the second uplink control information on the second PUCCH resource.

In another optional implementation, when sending the first uplink control information to the network device on the first PUCCH resource, or sending the second uplink control information to the network device on the second PUCCH resource, the communication unit 1301 is specifically configured to: when a time domain position of the first PUCCH resource is before a time domain position of the second PUCCH resource, send the first uplink control information on the first PUCCH resource; or when a time domain position of the second PUCCH resource is before a time domain position of the first PUCCH resource, send the second uplink control information on the second PUCCH resource.

In another optional implementation, when sending the first uplink control information to the network device on the first PUCCH resource, or sending the second uplink control information to the network device on the second PUCCH resource, the communication unit 1301 is specifically configured to: when the first PUCCH resource is configured to be repeatedly sent, send the second uplink control information on the second PUCCH resource; or when the second PUCCH resource is configured to be repeatedly sent, send the first uplink control information on the first PUCCH resource.

In an optional implementation, when there is one piece of first PUCCH configuration information, a priority corresponding to the first PUCCH configuration information is a high priority.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

This embodiment of this application is based on a same concept as the method embodiment shown in the uplink control information transmission method 200, and brings same technical effect. For a specific principle, refer to the descriptions of embodiments shown in the uplink control information transmission 200. Details are not described again.

In another possible design, the communication apparatus 1300 may include:
a communication unit 1301, configured to send a plurality of pieces of data to a terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processing unit 1302, configured to determine a PUCCH resource, where the PUCCH resource belongs to a PUCCH resource set configured in the first PUCCH configuration information or belongs to a PUCCH resource set configured in the second PUCCH configuration information.

The communication unit 1301 is further configured to receive uplink control information from the terminal device on the PUCCH resource, where the uplink control information includes the first HARQ-ACK information and the second HARQ-ACK information.

In an optional implementation, the communication unit 1301 is further configured to: send a physical uplink control channel resource indicator PRI in DCI corresponding to a last piece of multicast data, where the PRI indicates the PUCCH resource, and the PUCCH resource is a resource in a PUCCH resource set configured in the first PUCCH configuration information; or send a physical uplink control channel resource indicator PRI in DCI corresponding to a last piece of unicast data, where the PRI indicates the PUCCH resource, and the PUCCH resource is a resource in a PUCCH resource set configured in the second PUCCH configuration information.

In another optional implementation, the communication unit 1301 is further configured to: send a physical uplink control channel resource indicator PRI in last downlink control information DCI corresponding to the plurality of pieces of data, where the PRI indicates the PUCCH resource, and the PUCCH resource belongs to a PUCCH resource set configured in the first PUCCH configuration information, or the PUCCH resource belongs to a PUCCH resource set configured in the second PUCCH configuration information.

In another optional implementation, the communication unit 1301 is further configured to: send first indication information to the terminal device, where the first indication information indicates that the PUCCH resource belongs to a PUCCH resource set configured by using the first PUCCH configuration information or indicates that the PUCCH resource belongs to a PUCCH resource set configured by using the second PUCCH configuration information; and when the first indication information indicates that the PUCCH resource belongs to the PUCCH resource set configured by using the first PUCCH configuration information, the network device sends a physical uplink control channel resource indicator PRI in last DCI corresponding to the one or more pieces of multicast data, where the PRI indicates the PUCCH resource; or
when the first indication information indicates that the PUCCH resource belongs to the PUCCH resource set configured by using the second PUCCH configuration information, the network device sends a physical uplink control channel resource indicator PRI in last DCI corresponding to the one or more pieces of unicast data, where the PRI indicates the PUCCH resource.

In an optional implementation, when there is one piece of first PUCCH configuration information, a priority corresponding to the first PUCCH configuration information is a high priority.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

This embodiment of this application is based on a same concept as the method embodiment shown in the uplink control information transmission method 100, and brings same technical effect. For a specific principle, refer to the descriptions of embodiments shown in the uplink control information transmission method 100. Details are not described again.

In another possible design, the communication apparatus 1300 may include:
a communication unit 1301, configured to send first physical uplink control channel PUCCH configuration information corresponding to multicast data and second PUCCH configuration information corresponding to unicast data to a terminal device, where
the communication unit 1301 is further configured to send a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit; and
a processing unit 1302, configured to determine a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information.

The communication unit 1301 is further configured to receive at least one of first uplink control information and second uplink control information from the terminal device based on the first PUCCH resource and the second PUCCH resource, where the first uplink control information includes the first HARQ-ACK information, and the second uplink control information includes the second HARQ-ACK information.

In an optional implementation, when receiving at least one of the first uplink control information and the second uplink control information from the terminal device based on the first PUCCH resource and the second PUCCH resource, the communication unit 1301 is specifically configured to: when the first PUCCH resource and the second PUCCH resource do not overlap, receive the first uplink control information from the terminal device on the first PUCCH resource, and receive the second uplink control information from the terminal device on the second PUCCH resource.

In another optional implementation, when receiving at least one of the first uplink control information and the second uplink control information from the terminal device based on the first PUCCH resource and the second PUCCH resource, the communication unit 1301 is specifically configured to: when the first PUCCH resource and the second PUCCH resource overlap, receive the first uplink control information from the terminal device on the first PUCCH resource, or receive the second uplink control information from the terminal device on the second PUCCH resource.

In an optional implementation, when receiving the first uplink control information from the terminal device on the first PUCCH resource, or receiving the second uplink control information from the terminal device on the second PUCCH resource, the communication unit 1301 is specifically configured to: receive the first uplink control information on the first PUCCH resource, where a quantity of bits of the first uplink control information is greater than a quantity of bits of the second uplink control information; or receive the second uplink control information on the second PUCCH resource, where a quantity of bits of the second uplink control information is greater than or equal to a quantity of bits of the first uplink control information.

In another optional implementation, when receiving the first uplink control information from the terminal device on the first PUCCH resource, or receiving the second uplink control information from the terminal device on the second PUCCH resource, the communication unit 1301 is specifically configured to: receive the first uplink control information on the first PUCCH resource, where a quantity of bits of the first uplink control information is less than a quantity of bits of the second uplink control information; or the network device receives the second uplink control information on the second PUCCH resource, where a quantity of bits of the second uplink control information is less than or equal to a quantity of bits of the first uplink control information.

In another optional implementation, when receiving the first uplink control information from the terminal device on the first PUCCH resource, or receiving the second uplink control information from the terminal device on the second PUCCH resource, the communication unit 1301 is specifically configured to: receive the first uplink control information on the first PUCCH resource, where a time domain position of the first PUCCH resource is before a time domain position of the second PUCCH resource; or receive the second uplink control information on the second PUCCH resource, where a time domain position of the second PUCCH resource is before a time domain position of the first PUCCH resource.

In another optional implementation, when receiving the first uplink control information from the terminal device on the first PUCCH resource, or receiving the second uplink control information from the terminal device on the second PUCCH resource, the communication unit 1301 is specifically configured to: receive the second uplink control information on the second PUCCH resource, where the first PUCCH resource is configured to be repeatedly sent; or receive the first uplink control information on the first PUCCH resource, where the second PUCCH resource is configured to be repeatedly sent.

In an optional implementation, when there is one piece of first PUCCH configuration information, a priority corresponding to the first PUCCH configuration information is a high priority.

In an optional implementation, the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

This embodiment of this application is based on a same concept as the method embodiment shown in the uplink control information transmission method 200, and brings same technical effect. For a specific principle, refer to the descriptions of embodiments shown in the uplink control information transmission method 200. Details are not described again.

In another possible design, the communication apparatus 1300 may include:
a processing unit 1302, configured to determine first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities; and
a communication unit 1301, configured to send the first PUCCH configuration information and the second PUCCH configuration information to a terminal device.

This embodiment of this application is based on a same concept as the method embodiment shown in the uplink control information transmission method 300, and brings same technical effect. For a specific principle, refer to the descriptions of embodiments shown in the uplink control information transmission method 300. Details are not described again.

An embodiment of this application further provides a communication apparatus 1400. FIG. 14 is a schematic diagram of a structure of the communication apparatus 1400. The communication apparatus 1400 may be a terminal device or a network device, or may be a chip, a chip system, a processor, or the like that supports a terminal device in implementing the methods, or may be a chip, a chip system, a processor, or the like that supports a network device in implementing the methods. The apparatus may be configured to implement the methods described in the method embodiments. For details, refer to the descriptions in the method embodiments.

The communication apparatus 1400 includes one or more processors 1401. The processor 1401 may be a general-purpose processor, a dedicated processor, or the like. For example, the processor may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1400 may include one or more memories 1402. The memory may store instructions 1404. The instructions may be run on the processor 1401, so that the communication apparatus 1400 performs the methods described in the method embodiments. Optionally, the memory 1402 may further store data. The processor 1401 and the memory 1402 may be separately disposed, or may be integrated.

Optionally, the communication apparatus 1400 may further include a transceiver 1405 and an antenna 1406. The transceiver 1405 may be referred to as a transceiver unit, a transceiver machine, a transceiver circuit, or the like, and is configured to implement a transceiver function. The transceiver 1405 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1400 is a terminal device. The transceiver 1405 is configured to perform S102, S105, and S107 in the uplink control information transmission method 100, and perform S202, S205, and S207 in the uplink control information transmission method 200. The processor 1401 is configured to perform S106 in the uplink control information transmission method 100, perform S206 in the uplink control information transmission method 200, and perform S303 in the uplink control information transmission method 300.

The communication apparatus 1400 is a network device. The transceiver 1405 is configured to perform S101, S104, and S108 in the uplink control information transmission method 100, perform S201, S204, and S208 in the uplink control information transmission method 200, and perform S302 in the uplink control information transmission method 300. The processor 1401 is configured to perform S103 in the uplink control information transmission method 100, perform S203 in the uplink control information transmission method 200, and perform S301 in the uplink control information transmission method 300.

In another possible design, the processor 1401 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1401 may store instructions 1403. When the instructions 1403 are executed on the processor 1401, the communication apparatus 1400 may be enabled to perform the methods described in the method embodiments. The instructions 1403 may be built into the processor 1401. In this case, the processor 1401 may be implemented by using hardware.

In another possible design, the communication apparatus 1400 may include a circuit. The circuit may implement a sending, receiving, or communication function in the method embodiments. The processor and the transceiver that are described in this embodiment of this application may be implemented on an integrated circuit (integrated circuit, IC), an analog IC, a radio frequency integrated circuit RFIC, a hybrid signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a first device. However, a scope of the communication apparatus described in embodiments of this application is not limited thereto, and a structure of the communication apparatus may not be limited by FIG. 14. The communication apparatus may be an independent device or may be a part of a large device. For example, the communication apparatus may be:
(1) an independent integrated circuit IC, a chip, or a chip system or subsystem;
(2) a set of one or more ICs, where optionally, the IC set may also include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others, or the like.

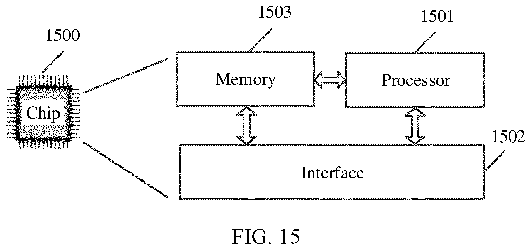

For a case in which the communication apparatus may be a chip or a chip system, refer to a schematic diagram of a structure of a chip shown in FIG. 15. The chip 1500 shown in FIG. 15 includes a processor 1501 and an interface 1502. There may be one or more processors 1501, and there may be a plurality of interfaces 1502. The chip 1500 may further include a memory 1503.

In a design, the chip is configured to implement a function of the terminal device in embodiments of this application.

The processor 1501 is configured to obtain first physical uplink control channel PUCCH configuration information corresponding to multicast data and second PUCCH configuration information corresponding to unicast data.

The interface 1502 is configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor 1501 is further configured to determine a PUCCH resource based on the first PUCCH configuration information or the second PUCCH configuration information.

The interface 1502 is further configured to send uplink control information to the network device on the PUCCH resource, where the uplink control information includes the first HARQ-ACK information and the second HARQ-ACK information.

In another design, the chip is configured to implement a function of the terminal device in embodiments of this application.

The processor 1501 is configured to obtain first physical uplink control channel PUCCH configuration information corresponding to multicast data and second PUCCH configuration information corresponding to unicast data.

The interface 1502 is configured to receive a plurality of pieces of data from a network device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor 1501 is further configured to: determine a first PUCCH resource based on the first PUCCH configuration information, and determine a second PUCCH resource based on the second PUCCH configuration information.

The interface 1502 is further configured to send at least one of first uplink control information and second uplink control information to the network device based on the first PUCCH resource and the second PUCCH resource, where the first uplink control information includes the first HARQ-ACK information, and the second uplink control information includes the second HARQ-ACK information.

In another design, the chip is configured to implement a function of the network device in embodiments of this application.

The interface 1502 is configured to send first physical uplink control channel PUCCH configuration information corresponding to multicast data and second PUCCH configuration information corresponding to unicast data to a terminal device.

The interface 1502 is further configured to send a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor 1501 is configured to determine a PUCCH resource, where the PUCCH resource belongs to a PUCCH resource set configured in the first PUCCH configuration information or belongs to a PUCCH resource set configured in the second PUCCH configuration information.

The interface 1502 is further configured to receive uplink control information from the terminal device on the PUCCH resource, where the uplink control information includes the first HARQ-ACK information and the second HARQ-ACK information.

In another design, the chip is configured to implement a function of the network device in embodiments of this application.

The interface 1502 is configured to send first physical uplink control channel PUCCH configuration information corresponding to multicast data and second PUCCH configuration information corresponding to unicast data to a terminal device.

The interface 1502 is further configured to send a plurality of pieces of data to the terminal device, where the plurality of pieces of data include one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit.

The processor 1501 is configured to determine a first PUCCH resource and a second PUCCH resource, where the first PUCCH resource belongs to a PUCCH resource set configured by using the first PUCCH configuration information, and the second PUCCH resource belongs to a PUCCH resource set configured by using the second PUCCH configuration information.

The interface 1502 is further configured to receive at least one of first uplink control information and second uplink control information from the terminal device based on the first PUCCH resource and the second PUCCH resource, where the first uplink control information includes the first HARQ-ACK information, and the second uplink control information includes the second HARQ-ACK information.

In another design, the chip is configured to implement a function of the network device in embodiments of this application.

The processor 1501 is configured to determine first physical uplink control channel PUCCH configuration information corresponding to multicast data and second PUCCH configuration information corresponding to unicast data, where first hybrid automatic repeat request-acknowledgment HARQ-ACK information corresponding to the multicast data and second HARQ-ACK information corresponding to the unicast data have different priorities.

The interface 1502 is configured to send the first PUCCH configuration information and the second PUCCH configuration information to a terminal device.

In this embodiment of this application, the communication apparatus 1400 and the chip 1500 may further perform the implementations of the communication apparatus 1300. A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This embodiment of this application is based on a same concept as the method embodiments shown in the uplink control information transmission method 100, the uplink control information transmission method 200, and the uplink control information transmission 300, and brings same technical effect. For a specific principle, refer to the descriptions of embodiments shown in the uplink control information transmission method 100, the uplink control information transmission method 200, and the uplink control information transmission 300. Details are not described again.

A person skilled in the art may further understand that various illustrative logical blocks (illustrative logic block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, functions of any one of the foregoing method embodiments are implemented.

This application further provides a computer program product, configured to store computer software instructions. When the instructions are executed by a communication apparatus, functions of any one of the foregoing method embodiments are implemented.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An uplink control information transmission method, wherein the method comprises:
receiving, by a terminal device, a plurality of pieces of data from a network device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
determining, by the terminal device, a PUCCH resource based on first physical uplink control channel PUCCH configuration information or second physical uplink control channel PUCCH configuration information, wherein the first PUCCH configuration information corresponds to the multicast data, the second PUCCH configuration information corresponds to the unicast data, and the first PUCCH configuration information and the second PUCCH configuration information are configured by higher layer signaling; and
sending, by the terminal device, uplink control information to the network device on the PUCCH resource, wherein the uplink control information comprises the first HARQ-ACK information and the second HARQ-ACK information.

2. The method according to claim 1, wherein the method further comprises:
obtaining, by the terminal device, the first PUCCH configuration information and the second PUCCH configuration information.

3. The method according to claim 1 or 2, wherein the determining, by the terminal device, a PUCCH resource based on first PUCCH configuration information or second PUCCH configuration information comprises:
determining, by the terminal device, the PUCCH resource based on the first PUCCH configuration information and a physical uplink control channel resource indicator PRI that is in last downlink control information DCI corresponding to the one or more pieces of multicast data, wherein the PUCCH resource belongs to a PUCCH resource set configured in the first PUCCH configuration information; or
determining, by the terminal device, the PUCCH resource based on the second PUCCH configuration information and a physical uplink control channel resource indicator PRI that is in last downlink control information DCI corresponding to the one or more pieces of unicast data, wherein the PUCCH resource belongs to a PUCCH resource set configured in the second PUCCH configuration information.

4. The method according to claim 1 or 2, wherein the determining, by the terminal device, a PUCCH resource based on first PUCCH configuration information or second PUCCH configuration information comprises:
determining, by the terminal device, the PUCCH resource based on a physical uplink control channel resource indicator PRI in last downlink control information DCI corresponding to the plurality of pieces of data and PUCCH configuration information corresponding to the last DCI, wherein
the PUCCH resource belongs to a PUCCH resource set configured in the first PUCCH configuration information or belongs to a PUCCH resource set configured in the second PUCCH configuration information.

5. The method according to claim 1 or 2, wherein the determining, by the terminal device, a PUCCH resource based on first PUCCH configuration information or second PUCCH configuration information comprises:
receiving, by the terminal device, first indication information from the network device, wherein the first indication information indicates the terminal device to determine the PUCCH resource based on the first PUCCH configuration information or the second PUCCH configuration information; and
when the first indication information indicates the terminal device to determine the PUCCH resource based on the first PUCCH configuration information, determining, by the terminal device, the PUCCH resource based on the first PUCCH configuration information and a physical uplink control channel resource indicator PRI that is in last downlink control information DCI corresponding to the one or more pieces of multicast data, wherein the PUCCH resource belongs to a PUCCH resource set configured in the first PUCCH configuration information; or
when the first indication information indicates the terminal device to determine the PUCCH resource based on the second PUCCH configuration information, determining, by the terminal device, the PUCCH resource based on the second PUCCH configuration information and a physical uplink control channel resource indicator PRI that is in last downlink control information DCI corresponding to the one or more pieces of unicast data, wherein the PUCCH resource belongs to a PUCCH resource set configured in the second PUCCH configuration information.

6. The method according to any one of claims 1 to 5, wherein
the uplink control information is obtained by appending a second HARQ-ACK codebook to a first HARQ-ACK codebook; and
the first HARQ-ACK codebook is generated based on the first HARQ-ACK information, and the second HARQ-ACK codebook is generated based on the second HARQ-ACK information.

7. The method according to any one of claims 1 to 6, wherein when there is one piece of first PUCCH configuration information, a priority corresponding to the first PUCCH configuration information is a high priority.

8. The method according to claim 7, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

9. An uplink control information transmission method, wherein the method comprises:
obtaining, by a terminal device, first physical uplink control channel PUCCH configuration information corresponding to multicast data and second PUCCH configuration information corresponding to unicast data;
receiving, by the terminal device, a plurality of pieces of data from a network device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
determining, by the terminal device, a first PUCCH resource based on the first PUCCH configuration information, and determining a second PUCCH resource based on the second PUCCH configuration information; and
sending, by the terminal device, at least one of first uplink control information and second uplink control information to the network device based on the first PUCCH resource and the second PUCCH resource, wherein the first uplink control information comprises the first HARQ-ACK information, and the second uplink control information comprises the second HARQ-ACK information.

10. The method according to claim 9, wherein the sending, by the terminal device, at least one of first uplink control information and second uplink control information to the network device based on the first PUCCH resource and the second PUCCH resource comprises:
when the first PUCCH resource and the second PUCCH resource do not overlap in time domain, sending, by the terminal device, the first uplink control information to the network device on the first PUCCH resource, and sending the second uplink control information to the network device on the second PUCCH resource.

11. The method according to claim 9, wherein the sending, by the terminal device, at least one of first uplink control information and second uplink control information to the network device based on the first PUCCH resource and the second PUCCH resource comprises:
when the first PUCCH resource and the second PUCCH resource overlap in time domain, sending, by the terminal device, the first uplink control information to the network device on the first PUCCH resource, or sending the second uplink control information to the network device on the second PUCCH resource.

12. The method according to claim 11, wherein the sending, by the terminal device, the first uplink control information to the network device on the first PUCCH resource, or sending the second uplink control information to the network device on the second PUCCH resource comprises:
when a quantity of bits of the first uplink control information is greater than a quantity of bits of the second uplink control information, sending, by the terminal device, the first uplink control information on the first PUCCH resource; or
when a quantity of bits of the second uplink control information is greater than or equal to a quantity of bits of the first uplink control information, sending, by the terminal device, the second uplink control information on the second PUCCH resource.

13. The method according to claim 11, wherein the sending, by the terminal device, the first uplink control information to the network device on the first PUCCH resource, or sending the second uplink control information to the network device on the second PUCCH resource comprises:
when a time domain position of the first PUCCH resource is before a time domain position of the second PUCCH resource, sending, by the terminal device, the first uplink control information on the first PUCCH resource; or
when a time domain position of the second PUCCH resource is before a time domain position of the first PUCCH resource, sending, by the terminal device, the second uplink control information on the second PUCCH resource.

14. The method according to claim 11, wherein the sending, by the terminal device, the first uplink control information to the network device on the first PUCCH resource, or sending the second uplink control information to the network device on the second PUCCH resource comprises:
when the first PUCCH resource is configured to be repeatedly sent, sending, by the terminal device, the second uplink control information on the second PUCCH resource; or
when the second PUCCH resource is configured to be repeatedly sent, sending, by the terminal device, the first uplink control information on the first PUCCH resource.

15. The method according to any one of claims 9 to 14, wherein when there is one piece of first PUCCH configuration information, a priority corresponding to the first PUCCH configuration information is a high priority.

16. The method according to claim 15, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

17. An uplink control information transmission method, wherein the method comprises:
sending, by a network device, a plurality of pieces of data to a terminal device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
determining, by the network device, a physical uplink control channel PUCCH resource, wherein the PUCCH resource belongs to a PUCCH resource set configured in first PUCCH configuration information or belongs to a PUCCH resource set configured in second PUCCH configuration information, the first PUCCH configuration information corresponds to the multicast data, the second PUCCH configuration information corresponds to the unicast data, and the first PUCCH configuration information and the second PUCCH configuration information are configured by higher layer signaling; and
receiving, by the network device, uplink control information from the terminal device on the PUCCH resource, wherein the uplink control information comprises the first HARQ-ACK information and the second HARQ-ACK information.

18. The method according to claim 17, wherein the method further comprises:
sending, by the network device, the first PUCCH configuration information and the second PUCCH configuration information to the terminal device.

19. The method according to claim 17 or 18, wherein the method further comprises:
sending, by the network device, a physical uplink control channel resource indicator PRI in DCI corresponding to a last piece of multicast data, wherein the PRI indicates the PUCCH resource, and the PUCCH resource is a resource in a PUCCH resource set configured in the first PUCCH configuration information; or
sending, by the network device, a physical uplink control channel resource indicator PRI in DCI corresponding to a last piece of unicast data, wherein the PRI indicates the PUCCH resource, and the PUCCH resource is a resource in a PUCCH resource set configured in the second PUCCH configuration information.

20. The method according to claim 17 or 18, wherein the method further comprises:
sending, by the network device, a physical uplink control channel resource indicator PRI in last downlink control information DCI corresponding to the plurality of pieces of data, wherein the PRI indicates the PUCCH resource, and the PUCCH resource belongs to a PUCCH resource set configured by using the first PUCCH configuration information, or the PUCCH resource belongs to a PUCCH resource set configured in the second PUCCH configuration information.

21. The method according to claim 17 or 18, wherein the method further comprises:
sending, by the network device, first indication information to the terminal device, wherein the first indication information indicates that the PUCCH resource belongs to a PUCCH resource set configured by using the first PUCCH configuration information or indicates that the PUCCH resource belongs to a PUCCH resource set configured by using the second PUCCH configuration information; and
when the first indication information indicates that the PUCCH resource belongs to the PUCCH resource set configured by using the first PUCCH configuration information, sending, by the network device, a physical uplink control channel resource indicator PRI in last DCI corresponding to the one or more pieces of multicast data, wherein the PRI indicates the PUCCH resource; or
when the first indication information indicates that the PUCCH resource belongs to the PUCCH resource set configured by using the second PUCCH configuration information, sending, by the network device, a physical uplink control channel resource indicator PRI in last DCI corresponding to the one or more pieces of unicast data, wherein the PRI indicates the PUCCH resource.

22. The method according to any one of claims 17 to 21, wherein
the uplink control information is obtained by appending a second HARQ-ACK codebook to a first HARQ-ACK codebook; and
the first HARQ-ACK codebook is generated based on the first HARQ-ACK information, and the second HARQ-ACK codebook is generated based on the second HARQ-ACK information.

23. The method according to any one of claims 17 to 22, wherein when there is one piece of first PUCCH configuration information, a priority corresponding to the first PUCCH configuration information is a high priority.

24. The method according to claim 23, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

25. An uplink control information transmission method, wherein the method comprises:
sending, by a network device, first physical uplink control channel PUCCH configuration information corresponding to multicast data and second PUCCH configuration information corresponding to unicast data to a terminal device;
sending, by the network device, a plurality of pieces of data to the terminal device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
determining, by the network device, a first PUCCH resource and a second PUCCH resource, wherein the first PUCCH resource belongs to a PUCCH resource set configured by using the first PUCCH configuration information, and the second PUCCH resource belongs to a PUCCH resource set configured by using the second PUCCH configuration information; and
receiving, by the network device, at least one of first uplink control information and second uplink control information from the terminal device based on the first PUCCH resource and the second PUCCH resource, wherein the first uplink control information comprises the first HARQ-ACK information, and the second uplink control information comprises the second HARQ-ACK information.

26. The method according to claim 25, wherein the receiving, by the network device, at least one of first uplink control information and second uplink control information from the terminal device based on the first PUCCH resource and the second PUCCH resource comprises:
when the first PUCCH resource and the second PUCCH resource do not overlap, receiving, by the network device, the first uplink control information from the terminal device on the first PUCCH resource, and receiving the second uplink control information from the terminal device on the second PUCCH resource.

27. The method according to claim 25, wherein the receiving, by the network device, at least one of first uplink control information and second uplink control information from the terminal device based on the first PUCCH resource and the second PUCCH resource comprises:
when the first PUCCH resource and the second PUCCH resource overlap, receiving, by the network device, the first uplink control information from the terminal device on the first PUCCH resource, or receiving the second uplink control information from the terminal device on the second PUCCH resource.

28. The method according to claim 27, wherein the receiving, by the network device, the first uplink control information from the terminal device on the first PUCCH resource, or receiving the second uplink control information from the terminal device on the second PUCCH resource comprises:
receiving, by the network device, the first uplink control information from the terminal device on the first PUCCH resource, wherein a quantity of bits of the first uplink control information is greater than a quantity of bits of the second uplink control information; or
receiving, by the network device, the second uplink control information from the terminal device on the second PUCCH resource, wherein a quantity of bits of the second uplink control information is greater than or equal to a quantity of bits of the first uplink control information.

29. The method according to claim 27, wherein the receiving, by the network device, the first uplink control information from the terminal device on the first PUCCH resource, or receiving the second uplink control information from the terminal device on the second PUCCH resource comprises:
receiving, by the network device, the first uplink control information from the terminal device on the first PUCCH resource, wherein a time domain position of the first PUCCH resource is before a time domain position of the second PUCCH resource; or
receiving, by the network device, the second uplink control information from the terminal device on the second PUCCH resource, wherein a time domain position of the second PUCCH resource is before a time domain position of the first PUCCH resource.

30. The method according to claim 27, wherein the receiving, by the network device, the first uplink control information from the terminal device on the first PUCCH resource, or receiving the second uplink control information from the terminal device on the second PUCCH resource comprises:
receiving, by the network device, the second uplink control information from the terminal device on the second PUCCH resource, wherein the first PUCCH resource is configured to be repeatedly sent; or
receiving, by the network device, the first uplink control information from the terminal device on the first PUCCH resource, wherein the second PUCCH resource is configured to be repeatedly sent.

31. The method according to any one of claims 25 to 30, wherein when there is one piece of first PUCCH configuration information, a priority corresponding to the first PUCCH configuration information is a high priority.

32. The method according to claim 31, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

33. An uplink control information transmission method, wherein the method comprises:
determining, by a network device, first physical uplink control channel PUCCH configuration information corresponding to multicast data and second PUCCH configuration information corresponding to unicast data, wherein first hybrid automatic repeat request-acknowledgment HARQ-ACK information corresponding to the multicast data and second HARQ-ACK information corresponding to the unicast data have different priorities; and
sending, by the network device, the first PUCCH configuration information and the second PUCCH configuration information to a terminal device.

34. A communication apparatus, wherein the apparatus comprises a communication unit and a processing unit;
the communication unit is configured to receive a plurality of pieces of data from a network device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
the processing unit is configured to determine a PUCCH resource based on first physical uplink control channel PUCCH configuration information or second physical uplink control channel PUCCH configuration information, wherein the first PUCCH configuration information corresponds to the multicast data, the second PUCCH configuration information corresponds to the unicast data, and the first PUCCH configuration information and the second PUCCH configuration information are configured by higher layer signaling; and
the communication unit is further configured to send uplink control information to the network device on the PUCCH resource, wherein the uplink control information comprises the first HARQ-ACK information and the second HARQ-ACK information.

35. The apparatus according to claim 34, wherein the processing unit is further configured to:
obtain the first PUCCH configuration information and the second PUCCH configuration information.

36. The apparatus according to claim 34 or 35, wherein when determining the PUCCH resource based on the first PUCCH configuration information or the second PUCCH configuration information, the processing unit is specifically configured to:
determine the PUCCH resource based on the first PUCCH configuration information and a physical uplink control channel resource indicator PRI that is in last downlink control information DCI corresponding to the one or more pieces of multicast data, wherein the PUCCH resource belongs to a PUCCH resource set configured in the first PUCCH configuration information; or
determine the PUCCH resource based on the second PUCCH configuration information and a physical uplink control channel resource indicator PRI that is in last downlink control information DCI corresponding to the one or more pieces of unicast data, wherein the PUCCH resource belongs to a PUCCH resource set configured in the second PUCCH configuration information.

37. The apparatus according to claim 34 or 35, wherein when determining the PUCCH resource based on the first physical uplink control channel PUCCH configuration information or the second physical uplink control channel PUCCH configuration information, the processing unit is specifically configured to:
determine the PUCCH resource based on a physical uplink control channel resource indicator PRI in last downlink control information DCI corresponding to the plurality of pieces of data and PUCCH configuration information corresponding to the last DCI, wherein
the PUCCH resource belongs to a PUCCH resource set configured in the first PUCCH configuration information or belongs to a PUCCH resource set configured in the second PUCCH configuration information.

38. The apparatus according to claim 34 or 35, wherein when determining the PUCCH resource based on the first physical uplink control channel PUCCH configuration information or the second physical uplink control channel PUCCH configuration information, the processing unit is specifically configured to:
receive first indication information from the network device, wherein the first indication information indicates the terminal device to determine the PUCCH resource based on the first PUCCH configuration information or the second PUCCH configuration information; and
when the first indication information indicates the terminal device to determine the PUCCH resource based on the first PUCCH configuration information, determine the PUCCH resource based on the first PUCCH configuration information and a physical uplink control channel resource indicator PRI that is in last downlink control information DCI corresponding to the one or more pieces of multicast data, wherein the PUCCH resource belongs to a PUCCH resource set configured in the first PUCCH configuration information; or
when the first indication information indicates the terminal device to determine the PUCCH resource based on the second PUCCH configuration information, determine the PUCCH resource based on the second PUCCH configuration information and a physical uplink control channel resource indicator PRI that is in last downlink control information DCI corresponding to the one or more pieces of unicast data, wherein the PUCCH resource belongs to a PUCCH resource set configured in the second PUCCH configuration information.

39. The apparatus according to any one of claims 34 to 38, wherein
the uplink control information is obtained by appending a second HARQ-ACK codebook to a first HARQ-ACK codebook; and
the first HARQ-ACK codebook is generated based on the first HARQ-ACK information, and the second HARQ-ACK codebook is generated based on the second HARQ-ACK information.

40. The apparatus according to any one of claims 34 to 39, wherein when there is one piece of first PUCCH configuration information, a priority corresponding to the first PUCCH configuration information is a high priority.

41. The apparatus according to claim 40, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

42. A communication apparatus, wherein the apparatus comprises a communication unit and a processing unit;
the communication unit is configured to send a plurality of pieces of data to a terminal device, wherein the plurality of pieces of data comprise one or more pieces of multicast data and one or more pieces of unicast data, and first hybrid automatic repeat request-acknowledgment HARQ-ACK information corresponding to the one or more pieces of multicast data and second HARQ-ACK information corresponding to the one or more pieces of unicast data have a same priority and need to be fed back in a same time unit;
the processing unit is configured to determine a physical uplink control channel PUCCH resource, wherein the PUCCH resource belongs to a PUCCH resource set configured in first PUCCH configuration information or belongs to a PUCCH resource set configured in second PUCCH configuration information, the first PUCCH configuration information corresponds to the multicast data, the second PUCCH configuration information corresponds to the unicast data, and the first PUCCH configuration information and the second PUCCH configuration information are configured by higher layer signaling; and
the communication unit is further configured to receive uplink control information from the terminal device on the PUCCH resource, wherein the uplink control information comprises the first HARQ-ACK information and the second HARQ-ACK information.

43. The apparatus according to claim 42, wherein the communication unit is further configured to:
send the first PUCCH configuration information and the second PUCCH configuration information to the terminal device.

44. The apparatus according to claim 42 or 43, wherein the processing unit is further configured to:
send a physical uplink control channel resource indicator PRI in DCI corresponding to a last piece of multicast data, wherein the PRI indicates the PUCCH resource, and the PUCCH resource is a resource in a PUCCH resource set configured in the first PUCCH configuration information; or
send a physical uplink control channel resource indicator PRI in DCI corresponding to a last piece of unicast data, wherein the PRI indicates the PUCCH resource, and the PUCCH resource is a resource in a PUCCH resource set configured in the second PUCCH configuration information.

45. The apparatus according to claim 42 or 43, wherein the processing unit is further configured to:
send a physical uplink control channel resource indicator PRI in last downlink control information DCI corresponding to the plurality of pieces of data, wherein the PRI indicates the PUCCH resource, and the PUCCH resource belongs to a PUCCH resource set configured by using the first PUCCH configuration information, or the PUCCH resource belongs to a PUCCH resource set configured in the second PUCCH configuration information.

46. The apparatus according to claim 42 or 43, wherein the processing unit is further configured to:
send first indication information to the terminal device, wherein the first indication information indicates that the PUCCH resource belongs to a PUCCH resource set configured by using the first PUCCH configuration information or indicates that the PUCCH resource belongs to a PUCCH resource set configured by using the second PUCCH configuration information; and
when the first indication information indicates that the PUCCH resource belongs to the PUCCH resource set configured by using the first PUCCH configuration information, send a physical uplink control channel resource indicator PRI in last DCI corresponding to the one or more pieces of multicast data, wherein the PRI indicates the PUCCH resource; or
when the first indication information indicates that the PUCCH resource belongs to the PUCCH resource set configured by using the second PUCCH configuration information, send a physical uplink control channel resource indicator PRI in last DCI corresponding to the one or more pieces of unicast data, wherein the PRI indicates the PUCCH resource.

47. The apparatus according to any one of claims 42 to 46, wherein
the uplink control information is obtained by appending a second HARQ-ACK codebook to a first HARQ-ACK codebook; and
the first HARQ-ACK codebook is generated based on the first HARQ-ACK information, and the second HARQ-ACK codebook is generated based on the second HARQ-ACK information.

48. The apparatus according to any one of claims 42 to 47, wherein when there is one piece of first PUCCH configuration information, a priority corresponding to the first PUCCH configuration information is a high priority.

49. The apparatus according to claim 48, wherein the priority corresponding to the first PUCCH configuration information is configured in a bit in DCI corresponding to the one or more pieces of multicast data, or is configured by using a radio network temporary identifier RNTI for scrambling the DCI, or is configured in radio resource control RRC signaling.

50. A communication apparatus, comprising a processor and a communication interface, wherein the communication interface is configured to communicate with another communication apparatus; and the processor is configured to run a program, so that the communication apparatus implements the method according to any one of claims 1 to 8, or the communication apparatus implements the method according to any one of claims 9 to 16, or the communication apparatus implements the method according to any one of claims 17 to 24, or the communication apparatus implements the method according to any one of claims 25 to 32, or the communication apparatus implements the method according to claim 33.

51. A communication apparatus, comprising a processor and an interface, wherein
the interface is configured to receive code instructions and transmit the code instructions to the processor; and
the processor is configured to run the code instructions to perform the method according to any one of claims 1 to 8, or configured to run the code instructions to perform the method according to any one of claims 9 to 16, or configured to run the code instructions to perform the method according to any one of claims 17 to 24, or configured to run the code instructions to perform the method according to any one of claims 25 to 32, or configured to run the code instructions to perform the method according to claim 33.

52. A computer-readable storage medium, configured to store instructions, wherein when the instructions are run by a computer, the computer is enabled to perform the method according to any one of claims 1 to 8, or the computer is enabled to perform the method according to any one of claims 9 to 16, or the computer is enabled to perform the method according to any one of claims 17 to 24, or the computer is enabled to perform the method according to any one of claims 25 to 32, or the computer is enabled to perform the method according to claim 33.
